# EUROPEAN PATENT APPLICATION

(11) **EP 4 704 484 A1**
(43) Date of publication of application: **04.03.2026**
(21) Application number: 24795919.0
(22) Date of filing: 17.04.2024
(51) Int. Cl.: H04W 72/231

(54) **METHOD AND APPARATUS USED IN NODE FOR WIRELESS COMMUNICATION**

(30) Priority: 23.04.2023 CN 202310443888; 26.04.2023 CN 202310464938
(71) Applicant: Apogee Networks, LLC, Dallas, TX 75201 (US)
(72) Inventor: HU, Yang, Shanghai 201206 (CN); ZHANG, Xiaobo, Shanghai 201206 (CN)
(74) Representative: Gunzelmann, Rainer
(86) International application number: PCT/CN2024/088196
(87) International publication number: WO 2024/222538

(57) **Abstract**

Disclosed in the present application are a method and apparatus used in a node for wireless communication. A first receiver receives first RRC signaling and a first information block, and a first transmitter sends a first HARQ-ACK bit block on a first PUCCH, the first HARQ-ACK bit block including at least one HARQ-ACK bit for a first SPS PDSCH configuration, wherein a target HARQ-ACK bit is a HARQ-ACK bit included in the first HARQ-ACK bit block, a first-type symbol is used for determining that the first HARQ-ACK bit block includes the target HARQ-ACK bit, and the first-type symbol is a symbol that is indicated as a downlink symbol by the first RRC signaling and determined, by the first information block, to be available for uplink transmission; and the target HARQ-ACK bit is a HARQ-ACK bit for a target SPS PDSCH, the target SPS PDSCH is an SPS PDSCH that is associated with the first SPS PDSCH configuration and is an SPS PDSCH other than a first-type SPS PDSCH, and the first-type SPS PDSCH is an SPS PDSCH overlapping the first-type symbol.

## Description

### Technical Field

The present application relates to a transmission method and apparatus in a wireless communication system, in particular to a transmission method and apparatus for wireless signals in a wireless communication system supporting a cellular network.

### Background Art

In a wireless communication system, HARQ-ACK (Hybrid automatic repeat request acknowledgement) feedback is an important means of improving communication performance.

### Summary of the Invention

How to improve reporting efficiency of HARQ-ACK information for an SPS PDSCH is an important problem that needs to be considered in system design; and the present application discloses a solution for the above problem. The present application may be applicable to a variety of wireless communication scenarios, such as eMBB (Enhanced Mobile Broadband), URLLC (Ultra-Reliable Low-Latency Communications), Internet of Vehicles, Internet of Things, NTN (Non-Terrestrial Networks), eMTC (enhanced Machine-Type Communication), scenarios supporting full-duplex operation, scenarios related to network energy saving, etc., and achieves similar technical effects. In addition, using a unified solution for different scenarios (including but not limited to the eMBB, the URLLC, the Internet of Vehicles, the Internet of Things, the NTN, the eMTC, the scenarios supporting the full-duplex operation, and the scenarios related to network energy saving) also helps to reduce hardware complexity and costs, or improve performance. In the absence of conflicts, embodiments and features in the embodiments in any node of the present application may be applied to any other node. In the absence of conflicts, the embodiments and the features in the embodiments of the present application can be arbitrarily combined with each other.

As one embodiment, interpretations of terminologies in the present application refer to definitions in the specification protocol TS36 series of 3GPP.

As one embodiment, the interpretations of terminologies in the present application refer to the definitions in the specification protocol TS38 series of 3GPP.

As one embodiment, the interpretations of terminologies in the present application refer to the definitions in the specification protocol TS37 series of 3GPP.

As one embodiment, the interpretations of terminologies in the present application refer to the definitions in the specification protocol of IEEE (Institute of Electrical and Electronics Engineers).

The present application discloses a method used in a first node for wireless communication, characterized by comprising:
receiving first RRC signaling and a first information block; and
sending a first HARQ-ACK bit block on a first PUCCH, the first HARQ-ACK bit block comprising at least one HARQ-ACK bit for a first SPS PDSCH configuration,
wherein a target HARQ-ACK bit is one HARQ-ACK bit comprised in the first HARQ-ACK bit block, a first-type symbol is used for determining that the first HARQ-ACK bit block comprises the target HARQ-ACK bit, and the first-type symbol is a symbol that is indicated as a downlink symbol by the first RRC signaling and determined, by the first information block, to be available for uplink transmission; and the target HARQ-ACK bit is an HARQ-ACK bit for a target SPS PDSCH, the target SPS PDSCH is an SPS PDSCH that is associated with the first SPS PDSCH configuration and is other than a first-type SPS PDSCH, and the first-type SPS PDSCH is an SPS PDSCH overlapping the first-type symbol.

As one embodiment, benefits of the above method comprise: improving feedback efficiency of HARQ-ACK information for an SPS PDSCH.

As one embodiment, the benefits of the above method comprise: improving using efficiency of an uplink resource.

As one embodiment, the benefits of the above method comprise: saving feedback overhead for unnecessary HARQ-ACK bits, thereby reducing resource overhead for a PUCCH, or improving transmission performance of a PUCCH.

As one embodiment, for the introduction of the first-type symbol, the above method gives a simple and effective solution for determining an HARQ-ACK bit for an SPS PDSCH in the first HARQ-ACK bit block, which effectively reduces feedback overhead on the premise of not affecting HARQ-ACK feedback performance.

As one embodiment, the benefits of the above method comprise: small changes to an existing 3GPP standard, simplicity and effectiveness.

According to one aspect of the present application, the above method is characterized in that,
the first RRC signaling is tdd-UL-DL-ConfigurationCommon.

As one embodiment, the benefits of the above method comprise: improving flexibility of base station scheduling, and facilitating supporting of duplex operation of at least a base station side.

According to one aspect of the present application, the above method is characterized in that,
the first-type symbol is a symbol that is indicated as a downlink symbol by the first RRC signaling and indicated as an uplink symbol by the first information block.

As one embodiment, for the introduction of a symbol that is indicated as a downlink symbol by the first RRC signaling and indicated as an uplink symbol by the first information block, the above method gives a simple and effective solution for determining an HARQ-ACK bit for an SPS PDSCH in the first HARQ-ACK bit block, which effectively reduces feedback overhead on the premise of not affecting HARQ-ACK feedback performance.

According to one aspect of the present application, the above method is characterized in that,
based on these two premises that the first node is configured to receive a second-type SPS PDSCH and HARQ-ACK information for the target SPS PDSCH is associated with the first PUCCH, the first node determines that the first HARQ-ACK bit block comprises the target HARQ-ACK bit; and the second-type SPS PDSCH is an SPS PDSCH that is associated with the first SPS PDSCH configuration and is other than the first-type SPS PDSCH.

According to one aspect of the present application, the above method is characterized in that,
the first-type SPS PDSCH is related to a first frequency band configuration, and the first frequency band configuration is used for determining a frequency domain resource that is allocated to an uplink.

As one embodiment, the benefits of the above method comprise: facilitating reduction of overhead of configuration signaling; or, facilitating full utilization of resources that are allocated for an SPS PDSCH, and effectively saving feedback overhead for unnecessary HARQ-ACK bits on the premise of full utilization of resources that are allocated for an SPS PDSCH.

According to one aspect of the present application, the above method is characterized in that,
the first frequency band configuration is used for determining that at least one symbol that is indicated as a downlink symbol by the first RRC signaling belongs to the first-type symbol.

As one embodiment, the benefits of the above method comprise: facilitating reduction of overhead of configuration signaling.

According to one aspect of the present application, the above method is characterized in that,
at least a part of a frequency domain resource allocation corresponding to an SPS PDSCH belonging to the first-type SPS PDSCH is comprised in a frequency domain resource that is allocated to an uplink as determined by the first frequency band configuration.

As one embodiment, the benefits of the above method comprise: facilitating full utilization of resources that are allocated for an SPS PDSCH, and effectively saving feedback overhead for unnecessary HARQ-ACK bits on the premise of full utilization of resources that are allocated for an SPS PDSCH.

According to one aspect of the present application, the above method is characterized in that,
the first PUCCH is used only for sending HARQ-ACK information for an SPS PDSCH that is associated with a first-type RNTI, and the first-type RNTI is a CS-RNTI or a G-CS-RNTI having enabled HARQ-ACK information reporting.

The present application discloses a method used in a second node for wireless communication, characterized by comprising:
sending first RRC signaling and a first information block; and
receiving a first HARQ-ACK bit block on a first PUCCH, the first HARQ-ACK bit block comprising at least one HARQ-ACK bit for a first SPS PDSCH configuration,
wherein a target HARQ-ACK bit is one HARQ-ACK bit comprised in the first HARQ-ACK bit block, a first-type symbol is used for determining that the first HARQ-ACK bit block comprises the target HARQ-ACK bit, and the first-type symbol is a symbol that is indicated as a downlink symbol by the first RRC signaling and determined, by the first information block, to be available for uplink transmission; and the target HARQ-ACK bit is an HARQ-ACK bit for a target SPS PDSCH, the target SPS PDSCH is an SPS PDSCH that is associated with the first SPS PDSCH configuration and is other than a first-type SPS PDSCH, and the first-type SPS PDSCH is an SPS PDSCH overlapping the first-type symbol.

According to one aspect of the present application, the above method is characterized in that,
the first RRC signaling is tdd-UL-DL-ConfigurationCommon.

According to one aspect of the present application, the above method is characterized in that,
the first-type symbol is a symbol that is indicated as a downlink symbol by the first RRC signaling and indicated as an uplink symbol by the first information block.

According to one aspect of the present application, the above method is characterized in that,
based on these two premises that a sending end of the first HARQ-ACK bit block is configured to receive a second-type SPS PDSCH and HARQ-ACK information for the target SPS PDSCH is associated with the first PUCCH, the first HARQ-ACK bit block is determined to comprise the target HARQ-ACK bit; and the second-type SPS PDSCH is an SPS PDSCH that is associated with the first SPS PDSCH configuration and is other than the first-type SPS PDSCH.

According to one aspect of the present application, the above method is characterized in that,
the first-type SPS PDSCH is related to a first frequency band configuration, and the first frequency band configuration is used for determining a frequency domain resource that is allocated to an uplink.

According to one aspect of the present application, the above method is characterized in that,
the first frequency band configuration is used for determining that at least one symbol that is indicated as a downlink symbol by the first RRC signaling belongs to the first-type symbol.

According to one aspect of the present application, the above method is characterized in that,
at least a part of a frequency domain resource allocation corresponding to an SPS PDSCH belonging to the first-type SPS PDSCH is comprised in a frequency domain resource that is allocated to an uplink as determined by the first frequency band configuration.

According to one aspect of the present application, the above method is characterized in that,
the first PUCCH is used only for sending HARQ-ACK information for an SPS PDSCH that is associated with a first-type RNTI, and the first-type RNTI is a CS-RNTI or a G-CS-RNTI having enabled HARQ-ACK information reporting.

The present application discloses a first node for wireless communication, characterized by comprising:
a first receiver receiving first RRC signaling and a first information block; and
a first transmitter sending a first HARQ-ACK bit block on a first PUCCH, the first HARQ-ACK bit block comprising at least one HARQ-ACK bit for a first SPS PDSCH configuration,
wherein a target HARQ-ACK bit is one HARQ-ACK bit comprised in the first HARQ-ACK bit block, a first-type symbol is used for determining that the first HARQ-ACK bit block comprises the target HARQ-ACK bit, and the first-type symbol is a symbol that is indicated as a downlink symbol by the first RRC signaling and determined, by the first information block, to be available for uplink transmission; and the target HARQ-ACK bit is an HARQ-ACK bit for a target SPS PDSCH, the target SPS PDSCH is an SPS PDSCH that is associated with the first SPS PDSCH configuration and is other than a first-type SPS PDSCH, and the first-type SPS PDSCH is an SPS PDSCH overlapping the first-type symbol.

The present application discloses a second node for wireless communication, characterized by comprising:
a second transmitter sending first RRC signaling and a first information block; and
a second receiver receiving a first HARQ-ACK bit block on a first PUCCH, the first HARQ-ACK bit block comprising at least one HARQ-ACK bit for a first SPS PDSCH configuration,
wherein a target HARQ-ACK bit is one HARQ-ACK bit comprised in the first HARQ-ACK bit block, a first-type symbol is used for determining that the first HARQ-ACK bit block comprises the target HARQ-ACK bit, and the first-type symbol is a symbol that is indicated as a downlink symbol by the first RRC signaling and determined, by the first information block, to be available for uplink transmission; and the target HARQ-ACK bit is an HARQ-ACK bit for a target SPS PDSCH, the target SPS PDSCH is an SPS PDSCH that is associated with the first SPS PDSCH configuration and is other than a first-type SPS PDSCH, and the first-type SPS PDSCH is an SPS PDSCH overlapping the first-type symbol.

### Brief Description of the Drawings

Other features, purposes and advantages of the present application will become more apparent from reading the detailed description of the non-limiting embodiments made with reference to the following drawings:
FIG. 1 shows a flowchart of processing of a first node according to one embodiment of the present application;
FIG. 2 shows a schematic diagram of a network architecture according to one embodiment of the present application;
FIG. 3 shows a schematic diagram of a wireless protocol architecture for a user plane and a control plane according to one embodiment of the present application;
FIG. 4 shows a schematic diagram of a first communication device and a second communication device according to one embodiment of the present application;
FIG. 5 shows a flowchart of signal transmission according to one embodiment of the present application;
FIG. 6 shows a schematic diagram explaining that a first node determines that a first HARQ-ACK bit block comprises a target HARQ-ACK bit according to one embodiment of the present application;
FIG. 7 shows a schematic diagram of a relationship between a first-type SPS PDSCH and a first frequency band configuration according to one embodiment of the present application;
FIG. 8 shows a schematic diagram of a relationship between a first frequency band configuration and a first-type symbol according to one embodiment of the present application;
FIG. 9 shows a schematic diagram of a relationship among a given SPS PDSCH, a first-type SPS PDSCH, and a first frequency band configuration;
FIG. 10 shows a structural block diagram of a processing apparatus in a first node device according to one embodiment of the present application; and
FIG. 11 shows a structural block diagram of a processing apparatus in a second node device according to one embodiment of the present application.

### Detailed Description of Embodiments

The technical solution of the present application will be further described in detail below in conjunction with drawings. It should be noted that, in the absence of conflicts, embodiments and features in the embodiments of the present application may be arbitrarily combined with each other.

### Embodiment 1

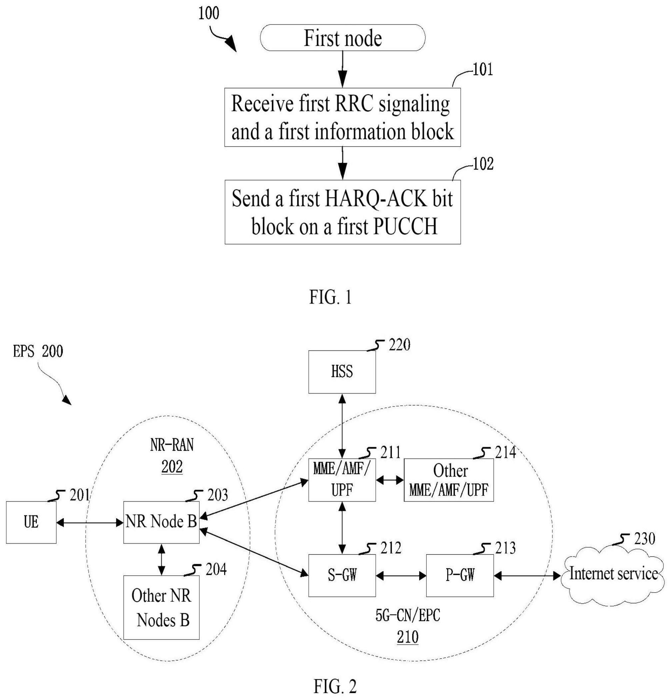

Embodiment 1 illustrates a flowchart of processing of a first node according to one embodiment of the present application, as shown in FIG. 1.

In Embodiment 1, the first node in the present application receives first RRC signaling and a first information block in step 101; and sends a first HARQ-ACK bit block on a first PUCCH in step 102.

In Embodiment 1, the first HARQ-ACK bit block comprises at least one HARQ-ACK bit for a first SPS PDSCH configuration; a target HARQ-ACK bit is one HARQ-ACK bit comprised in the first HARQ-ACK bit block, a first-type symbol is used for determining that the first HARQ-ACK bit block comprises the target HARQ-ACK bit, and the first-type symbol is a symbol that is indicated as a downlink symbol by the first RRC signaling and determined, by the first information block, to be available for uplink transmission; and the target HARQ-ACK bit is an HARQ-ACK bit for a target SPS PDSCH, the target SPS PDSCH is an SPS PDSCH that is associated with the first SPS PDSCH configuration and is other than a first-type SPS PDSCH, and the first-type SPS PDSCH is an SPS PDSCH overlapping the first-type symbol.

As one embodiment, the first RRC signaling comprises at least one field in at least one IE (Information Element).

As one embodiment, the first RRC signaling is one IE.

As one embodiment, the first RRC signaling is one field in one IE.

As one embodiment, the first RRC signaling is one RRC IE.

As one embodiment, the first RRC signaling comprises one RRC parameter.

As one embodiment, the first RRC signaling comprises time domain configuration information.

As one embodiment, the first RRC signaling comprises TDD configuration information of a UL/DL (Uplink/Downlink).

As one embodiment, the first RRC signaling comprises tdd-UL-DL-ConfigurationCommon.

As one embodiment, the first RRC signaling comprises tdd-UL-DL-ConfigurationCommon and tdd-UL-DL-ConfigurationDedicated.

As one embodiment, the first RRC signaling is tdd-UL-DL-ConfigurationCommon.

As one embodiment, a name of the first RRC signaling comprises tdd-UL-DL-ConfigurationCommon.

As one embodiment, the first information block comprises physical layer signaling.

As one embodiment, the first information block comprises DCI (Downlink control information).

As one embodiment, the first information block comprises at least one field in one DCI format.

As one embodiment, the first information block comprises higher layer signaling.

As one embodiment, the first information block comprises an MAC CE (Medium Access Control layer Control Element).

As one embodiment, the first information block comprises RRC (Radio Resource Control) signaling.

As one embodiment, the first information block comprises at least one field in at least one IE (Information Element).

As one embodiment, the first information block is DCI.

As one embodiment, the first information block is one field in one DCI format.

As one embodiment, the first information block is one MAC CE.

As one embodiment, the first information block is one field in one MAC CE.

As one embodiment, the first information block is one RRC IE.

As one embodiment, the first information block is one field in one IE.

As one embodiment, the first information block is RRC signaling.

As one embodiment, a name of the first information block comprises subband.

As one embodiment, a name of the first information block comprises SBFD.

As one embodiment, the first information block comprises configuration information for at least one frequency band resource.

As one embodiment, the first RRC signaling is tdd-UL-DL-ConfigurationCommon, and the first information block is tdd-UL-DL-ConfigurationDedicated.

As one embodiment, a name of the first RRC signaling comprises tdd-UL-DL-ConfigurationCommon, and a name of the first information block comprises tdd-UL-DL-ConfigurationDedicated.

As one embodiment, the first information block is an IE other than tdd-UL-DL-ConfigurationCommon, and the first RRC signaling is tdd-UL-DL-ConfigurationDedicated.

As one embodiment, a name of the first information block does not comprise tdd-UL-DL-ConfigurationCommon, and a name of the first RRC signaling comprises tdd-UL-DL-ConfigurationDedicated.

As one embodiment, the first RRC signaling comprises tdd-UL-DL-ConfigurationDedicated, and the first information block does not comprise tdd-UL-DL-ConfigurationCommon.

As one embodiment, the first information block is RRC signaling other than the first RRC signaling.

As one embodiment, the first RRC signaling is received before the first information block.

As one embodiment, the first RRC signaling is received after the first information block.

As one embodiment, the first RRC signaling and the first information block are received simultaneously.

As one embodiment, there exists at least 1 symbol that is indicated as a downlink symbol by the first RRC signaling.

As one embodiment, the first HARQ-ACK bit block is used for generating a first sequence, and the first sequence is sent on the first PUCCH (Physical uplink control channel) after being mapped to physical resources.

As one embodiment, the first HARQ-ACK bit block is sent on the first PUCCH after undergoing at least sequence modulation and mapping to physical resources.

As one embodiment, the first HARQ-ACK bit block is sent on the first PUCCH after undergoing at least part of CRC attachment, segmentation, code block CRC attachment, channel coding, rate matching, concatenation, scrambling, modulation, spreading, and mapping to physical resources.

As one embodiment, the first HARQ-ACK bit block is sent on the first PUCCH after undergoing at least part of CRC attachment, segmentation, code block CRC attachment, channel coding, rate matching, concatenation, scrambling, modulation, block-wise spreading, transform precoding, and mapping to physical resources.

As one embodiment, HARQ-ACK bits in the first HARQ-ACK bit block are sent after being multiplexed on the first PUCCH.

As one embodiment, the first PUCCH is used only for sending HARQ-ACK information for an SPS PDSCH.

As one embodiment, the first HARQ-ACK bit block comprises only one HARQ-ACK bit.

As one embodiment, the first HARQ-ACK bit block comprises a plurality of HARQ-ACK bits.

As one embodiment, there exist 2 HARQ-ACK bits in the first HARQ-ACK bit block, and these 2 HARQ-ACK bits are respectively generated for different serving cells.

As one embodiment, there exist 2 HARQ-ACK bits in the first HARQ-ACK bit block, and these 2 HARQ-ACK bits are respectively generated for different SPS PDSCH configurations.

As one embodiment, there exist 2 HARQ-ACK bits in the first HARQ-ACK bit block, and these 2 HARQ-ACK bits are respectively generated for different downlink slots.

As one embodiment, there exist 2 HARQ-ACK bits in the first HARQ-ACK bit block, and both of these 2 HARQ-ACK bits are generated for the same serving cell.

As one embodiment, there exist 2 HARQ-ACK bits in the first HARQ-ACK bit block, and both of these 2 HARQ-ACK bits are generated for the same SPS PDSCH configuration.

As one embodiment, the first HARQ-ACK bit block is: an HARQ-ACK bit in response to more than one SPS PDSCH (Semi-Persistent Scheduling Physical Downlink Shared CHannel).

As one embodiment, the first HARQ-ACK bit block is one HARQ-ACK codebook.

As one embodiment, the first HARQ-ACK bit block is one semi-static HARQ-ACK codebook.

As one embodiment, the first HARQ-ACK bit block is one dynamic HARQ-ACK codebook.

As one embodiment, the first HARQ-ACK bit block is one HARQ-ACK codebook only for an SPS PDSCH reception.

As one embodiment, one HARQ-ACK bit in the first HARQ-ACK bit block is one HARQ-ACK information bit.

As one embodiment, the first SPS PDSCH configuration is configured for a first serving cell.

As one embodiment, the first SPS PDSCH configuration is a configuration for downlink semi-persistent transmission.

As one embodiment, the first SPS PDSCH configuration is configured by RRC signaling.

As one embodiment, the first SPS PDSCH configuration is configured by SPS-Config.

As one embodiment, one HARQ-ACK bit for the first SPS PDSCH configuration is: an HARQ-ACK bit in response to one SPS PDSCH that is associated with the first SPS PDSCH configuration.

As one embodiment, one HARQ-ACK bit for the first SPS PDSCH configuration is: an HARQ-ACK bit for one SPS PDSCH that is associated with the first SPS PDSCH configuration.

As one embodiment, the target HARQ-ACK bit is an HARQ-ACK bit for the first SPS PDSCH configuration.

As one embodiment, the target HARQ-ACK bit is an HARQ-ACK bit in response to the target SPS PDSCH.

As one embodiment, the target HARQ-ACK bit is used for indicating whether a transport block in the target SPS PDSCH is correctly decoded.

As one embodiment, the target HARQ-ACK bit is an HARQ-ACK bit generated for the target SPS PDSCH.

As one embodiment, the meaning of the statement of "a first-type symbol is used for determining that the first HARQ-ACK bit block comprises the target HARQ-ACK bit" is:
the first node determines, after performing a determination, that the first HARQ-ACK bit block comprises the target HARQ-ACK bit, and the determination being performed depends on the first-type symbol.

As one embodiment, the meaning of the statement of "a first-type symbol is used for determining that the first HARQ-ACK bit block comprises the target HARQ-ACK bit" is:
the first node determines, after performing a determination, that the first HARQ-ACK bit block comprises the target HARQ-ACK bit, a determination condition of the determination being performed comprises that the first node is configured to receive a second-type SPS PDSCH, and the second-type SPS PDSCH is an SPS PDSCH that is associated with the first SPS PDSCH configuration and is other than the first-type SPS PDSCH.

As one embodiment, the meaning of the statement of "a first-type symbol is used for determining that the first HARQ-ACK bit block comprises the target HARQ-ACK bit" is:
the first node determines, after performing a determination, that the first HARQ-ACK bit block comprises the target HARQ-ACK bit, and a determination condition of the determination being performed is: the first node is configured to receive the second-type SPS PDSCH, and HARQ-ACK information for the target SPS PDSCH is associated with the first PUCCH; and the second-type SPS PDSCH is an SPS PDSCH that is associated with the first SPS PDSCH configuration and is other than the first-type SPS PDSCH.

As one embodiment, the meaning of the statement of "a first-type symbol is used for determining that the first HARQ-ACK bit block comprises the target HARQ-ACK bit" is:
based on a first configuration condition, the first node determines that the first HARQ-ACK bit block comprises the target HARQ-ACK bit; the first configuration condition comprises: the first node is configured to receive the second-type SPS PDSCH; and the second-type SPS PDSCH is an SPS PDSCH that is associated with the first SPS PDSCH configuration and is other than the first-type SPS PDSCH.

As one embodiment, the meaning of the statement of "a first-type symbol is used for determining that the first HARQ-ACK bit block comprises the target HARQ-ACK bit" is:
based on these two premises that the first node is configured to receive the second-type SPS PDSCH and HARQ-ACK information for the target SPS PDSCH is associated with the first PUCCH, the first node determines that the first HARQ-ACK bit block comprises the target HARQ-ACK bit; and the second-type SPS PDSCH is an SPS PDSCH that is associated with the first SPS PDSCH configuration and is other than the first-type SPS PDSCH.

As one embodiment, the first node determines, after performing a determination, that the first HARQ-ACK bit block comprises the target HARQ-ACK bit, a determination condition of the determination being performed comprises that the first node is configured to receive the second-type SPS PDSCH, and the second-type SPS PDSCH is an SPS PDSCH that is associated with the first SPS PDSCH configuration and is other than the first-type SPS PDSCH.

As one embodiment, the first node determines, after performing a determination, that the first HARQ-ACK bit block comprises the target HARQ-ACK bit, and a determination condition of the determination being performed is: the first node is configured to receive the second-type SPS PDSCH, and HARQ-ACK information for the target SPS PDSCH is associated with the first PUCCH; and the second-type SPS PDSCH is an SPS PDSCH that is associated with the first SPS PDSCH configuration and is other than the first-type SPS PDSCH.

As one embodiment, based on the first configuration condition, the first node determines that the first HARQ-ACK bit block comprises the target HARQ-ACK bit; the first configuration condition comprises: the first node is configured to receive the second-type SPS PDSCH; and the second-type SPS PDSCH is an SPS PDSCH that is associated with the first SPS PDSCH configuration and is other than the first-type SPS PDSCH.

As one embodiment, based on these two premises that the first node is configured to receive the second-type SPS PDSCH and HARQ-ACK information for the target SPS PDSCH is associated with the first PUCCH, the first node determines that the first HARQ-ACK bit block comprises the target HARQ-ACK bit; and the second-type SPS PDSCH is an SPS PDSCH that is associated with the first SPS PDSCH configuration and is other than the first-type SPS PDSCH.

As one embodiment, the first node is configured with a first time window, and a quantity of the first-type symbol in the first time window indicates that the first HARQ-ACK bit block comprises the target HARQ-ACK bit; and the first time window comprises consecutive slots, and a slot occupied by the target SPS PDSCH is in the first time window.

As one embodiment, the first-type symbol is a symbol that is indicated as a downlink symbol by the first RRC signaling and indicated as a symbol other than the downlink symbol by the first information block.

As one embodiment, the first-type symbol is a symbol that is indicated as a downlink symbol by the first RRC signaling and indicated to be for full-duplex operation by the first information block.

As one embodiment, the first-type symbol is a symbol that is indicated as a downlink symbol by the first RRC signaling and indicated to be for subband non-overlapping full-duplex operation by the first information block.

As one embodiment, the meaning of the statement of "the first-type symbol is a symbol that is indicated as a downlink symbol by the first RRC signaling and determined, by the first information block, to be available for uplink transmission" is: the first-type symbol is a symbol(s) that is (are) indicated as a downlink symbol(s) by the first RRC signaling, and is (are) a symbol(s) that is (are) determined as a symbol(s) available for uplink transmission by the first information block.

As one embodiment, the meaning of the statement of "determined to be available for uplink transmission by the first information block" is: indicated as an uplink symbol by the first information block.

As one embodiment, the meaning of the statement of "determined to be available for uplink transmission by the first information block" is: configured as an uplink symbol by the first information block.

As one embodiment, the first RRC signaling is tdd-UL-DL-ConfigurationCommon; and the meaning of the statement of "determined to be available for uplink transmission by the first information block" is: indicated as an uplink symbol or a flexible symbol by the first information block.

As one embodiment, the first RRC signaling is tdd-UL-DL-ConfigurationCommon; and the meaning of the statement of "determined to be available for uplink transmission by the first information block" is: indicated to be available for uplink transmission by the first information block.

As one embodiment, the first RRC signaling is tdd-UL-DL-ConfigurationCommon; and the meaning of the statement of "determined to be available for uplink transmission by the first information block" is: configured to be available for uplink transmission by the first information block.

As one embodiment, the first RRC signaling is tdd-UL-DL-ConfigurationCommon; and the meaning of the statement of "determined to be available for uplink transmission by the first information block" is: configured to be available for uplink transmission based on at least part of information comprised in the first information block.

As one embodiment, the meaning of the statement of "determined to be available for uplink transmission by the first information block" is: configured as an uplink symbol based on at least part of information comprised in the first information block.

As one embodiment, the uplink transmission comprises transmission of data or control information on an uplink channel.

As one embodiment, the uplink transmission comprises transmission of a physical layer uplink channel.

As one embodiment, the uplink transmission comprises transmission of at least one of a PUSCH (Physical uplink shared channel), a PUCCH (Physical uplink control channel), a PRACH (Physical random-access channel), and an SRS (Sounding reference signal).

As one embodiment, the first RRC signaling is tdd-UL-DL-ConfigurationCommon, and the first-type symbol is a symbol(s) that is (are) indicated as a downlink symbol(s) by the first RRC signaling and indicated as an uplink symbol(s) or a flexible symbol(s) by the first information block.

As one embodiment, the first-type symbol is a symbol(s) that is (are) indicated as a downlink symbol(s) by the first RRC signaling and indicated as an uplink symbol(s) by the first information block.

As one embodiment, the first RRC signaling is tdd-UL-DL-ConfigurationCommon, and the first-type symbol is a symbol(s) that is (are) indicated as a downlink symbol(s) by the first RRC signaling and implicitly indicated as an uplink symbol(s) or a flexible symbol(s) by the first information block.

As one embodiment, the first-type symbol is a symbol(s) that is (are) indicated as a downlink symbol(s) by the first RRC signaling and implicitly indicated as an uplink symbol(s) by the first information block.

As one embodiment, the first-type symbol is a symbol in one symbol set.

As one embodiment, one symbol in the present application is a time domain symbol.

As one embodiment, one symbol in the present application is an OFDM (Orthogonal frequency division multiplex) symbol.

As one embodiment, one symbol in the present application is a symbol in a slot.

As one embodiment, one symbol in the present application comprises one duration in the time domain.

As one embodiment, when one SPS PDSCH configuration comprises configuration information for one SPS PDSCH, this SPS PDSCH is associated with this SPS PDSCH configuration.

As one embodiment, for one SPS PDSCH, an occupied time domain resource is determined based on a periodicity that is indicated by an associated SPS PDSCH configuration.

As one embodiment, for one SPS PDSCH, an applied HARQ (Hybrid automatic repeat request) process number is determined based on a number of HARQ processes that are indicated by an associated SPS PDSCH configuration.

As one embodiment, one SPS PDSCH is activated for an associated SPS PDSCH configuration.

As one embodiment, the first SPS PDSCH configuration is configured for the first serving cell; and for the first node, the first serving cell is configured with one or more SPS PDSCH configurations.

As one embodiment, the first-type SPS PDSCH is an SPS PDSCH that does not need to be received.

As one embodiment, the meaning of the statement of "the first-type SPS PDSCH is an SPS PDSCH overlapping the first-type symbol" is: the first-type SPS PDSCH is an SPS PDSCH that does not need to be received due to overlapping the first-type symbol.

As one embodiment, the meaning of the statement of "the first-type SPS PDSCH is an SPS PDSCH overlapping the first-type symbol" is: the first-type SPS PDSCH is an SPS PDSCH that does not need to be received at least due to overlapping the first-type symbol in the time domain.

As one embodiment, the first-type SPS PDSCH overlaps at least one symbol in the first-type symbol in the time domain.

As one embodiment, the first-type SPS PDSCH is an SPS PDSCH overlapping any symbol in the first-type symbol in the time domain.

As one embodiment, one SPS PDSCH other than the first-type SPS PDSCH does not belong to the first-type SPS PDSCH.

As one embodiment, the target SPS PDSCH is an SPS PDSCH other than a third-type SPS PDSCH, and the third-type SPS PDSCH is an SPS PDSCH that does not need to be received among overlapping SPS PDSCHs.

As one embodiment, the target SPS PDSCH is an SPS PDSCH other than a fourth-type SPS PDSCH, and the fourth-type SPS PDSCH is an SPS PDSCH that does not need to be received based on a UE capability for a number of PDSCH receptions in one slot.

As one embodiment, the target SPS PDSCH is an SPS PDSCH other than a fifth-type SPS PDSCH, and the fifth-type SPS PDSCH is an SPS PDSCH overlapping a symbol(s) that is (are) indicated as an uplink symbol(s) by tdd-UL-DL-ConfigurationCommon or tdd-UL-DL-ConfigurationDedicated.

As one embodiment, the target SPS PDSCH is an SPS PDSCH other than the fifth-type SPS PDSCH, and the fifth-type SPS PDSCH is an SPS PDSCH that does not need to be received due to overlapping a symbol(s) that is (are) indicated as an uplink symbol(s) by tdd-UL-DL-ConfigurationCommon or tdd-UL-DL-ConfigurationDedicated.

As one embodiment, one SPS PDSCH other than the third-type SPS PDSCH does not belong to the third-type SPS PDSCH.

As one embodiment, one SPS PDSCH other than the fourth-type SPS PDSCH does not belong to the fourth-type SPS PDSCH.

As one embodiment, one SPS PDSCH other than the fifth-type SPS PDSCH does not belong to the fifth-type SPS PDSCH.

As one embodiment, overlapping between one SPS PDSCH and a symbol is in terms of the time domain.

As one embodiment, any HARQ-ACK bit in the first HARQ-ACK bit block is generated for one serving cell, one SPS PDSCH configuration, and one downlink slot.

As one embodiment, the target SPS PDSCH is an SPS PDSCH other than a sixth-type SPS PDSCH, the sixth-type SPS PDSCH is an SPS PDSCH overlapping a second-type symbol, and the second-type symbol is a symbol(s) that is (are) indicated as a flexible symbol(s) by tdd-UL-DL-ConfigurationCommon.

As one embodiment, the target SPS PDSCH is an SPS PDSCH other than the sixth-type SPS PDSCH, the sixth-type SPS PDSCH is an SPS PDSCH that does not need to be received due to overlapping the second-type symbol, and the second-type symbol is a symbol that is indicated as a flexible symbol by tdd-UL-DL-ConfigurationCommon.

As one embodiment, the target SPS PDSCH is an SPS PDSCH other than the sixth-type SPS PDSCH, the sixth-type SPS PDSCH is an SPS PDSCH overlapping the second-type symbol, and the second-type symbol is a symbol that is indicated as a flexible symbol by tdd-UL-DL-ConfigurationCommon or tdd-UL-DL-ConfigurationDedicated.

As one embodiment, the target SPS PDSCH is an SPS PDSCH other than the sixth-type SPS PDSCH, the sixth-type SPS PDSCH is an SPS PDSCH that does not need to be received due to overlapping the second-type symbol, and the second-type symbol is a symbol that is indicated as a flexible symbol by tdd-UL-DL-ConfigurationCommon or tdd-UL-DL-ConfigurationDedicated.

As one embodiment, the first information block is used for determining the second-type symbol.

As one embodiment, the first information block is used for configuring the second-type symbol.

As one embodiment, the first information block is used for indicating the second-type symbol.

As one embodiment, the second-type symbol is a symbol that is indicated as a flexible symbol by the first RRC signaling and indicated as a symbol other than a downlink symbol by the first information block.

As one embodiment, the second-type symbol is a symbol that is indicated as a flexible symbol by the first RRC signaling and indicated to be for full-duplex operation by the first information block.

As one embodiment, the second-type symbol is a symbol that is indicated as a flexible symbol by the first RRC signaling and indicated to be for subband non-overlapping full-duplex operation by the first information block.

As one embodiment, the second-type symbol is a symbol that is indicated as a flexible symbol by the first RRC signaling and indicated as a symbol available for uplink transmission by the first information block.

As one embodiment, one SPS PDSCH other than the sixth-type SPS PDSCH does not belong to the sixth-type SPS PDSCH.

### Embodiment 2

Embodiment 2 illustrates a schematic diagram of one network architecture according to the present application, as shown in FIG. 2.

FIG. 2 illustrates a diagram of a network architecture 200 of a 5G NR, LTE (Long-Term Evolution) and LTE-A (Long-Term Evolution Advanced) system. The 5G NR or LTE network architecture 200 may be referred to as an EPS (Evolved Packet System) 200 or some other suitable terminologies. The EPS 200 may comprise one or more pieces of UE (User Equipment) 201, an NG-RAN (Next Generation Radio Access Network) 202, an EPC (Evolved Packet Core)/5G-CN (5G-Core Network) 210, an HSS (Home Subscriber Server) 220, and an Internet service 230. The EPS may be interconnected with other access networks, but these entities/interfaces are not shown for simplicity. As shown in the figure, the EPS provides packet switching services, but those skilled in the art will readily appreciate that various concepts presented throughout the present application may be extended to networks providing circuit switching services or other cellular networks. The NG-RAN comprises an NR node B (gNB) 203 and other gNBs 204. The gNB203 provides user and control plane protocol termination toward the UE201. The gNB203 may be connected to other gNBs 204 via an Xn interface (e.g., backhaul). The gNB203 may also be referred to as a base station, a base transceiver station, a radio base station, a radio transceiving device, a transceiving device function, a basic service set (BSS), an extended service set (ESS), a TRP (Transmitter Receiver Point), or some other suitable terminologies. The gNB203 provides an access point to the EPC/5G-CN 210 for the UE201. Examples of the UE201 comprise a cellular phone, a smart phone, a session initiation protocol (SIP) phone, a laptop computer, a personal digital assistant (PDA), a satellite radio, non-terrestrial base station communication, satellite mobile communication, a global positioning system, a multimedia apparatus, a video apparatus, a digital audio player (e.g., an MP3 player), a camera, a game console, a drone, an aircraft, a narrowband Internet of Things device, a machine type communication device, a land vehicle, an automobile, a wearable device, or any other similarly functional apparatus. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB203 is connected to the EPC/5G-CN 210 through an S1/NG interface. The EPC/5G-CN 210 comprises an MME (Mobility Management Entity)/AMF (Authentication Management Field)/UPF (User Plane Function) 211, other MME/AMF/UPF214, an S-GW (Service Gateway) 212, and a P-GW (Packet Data Network Gateway) 213. The MME/AMF/UPF211 is a control node that processes signaling between the UE201 and the EPC/5G-CN 210. Generally, the MME/AMF/UPF211 provides bearer and connection management. All user IP (Internet Protocol) packets are transmitted through the S-GW212, and the S-GW212 itself is connected to the P-GW213. The P-GW213 provides UE IP address allocation and other functions. The P-GW213 is connected to the Internet service 230. The Internet service 230 comprises operator-corresponding Internet protocol services, which may specifically comprise the Internet, an intranet, an IMS (IP Multimedia Subsystem), and a packet switching streaming service.

As one embodiment, the UE201 corresponds to a first node in the present application.

As one embodiment, the gNB203 corresponds to a second node in the present application.

As one embodiment, the UE201 corresponds to the first node in the present application, and the gNB203 corresponds to the second node in the present application.

As one embodiment, the gNB203 is a macrocellular base station.

As one embodiment, the gNB203 is a micro cell base station.

As one embodiment, the gNB203 is a picocell base station.

As one embodiment, the gNB203 is a Femtocell.

As one embodiment, the gNB203 is a base station device supporting a large latency difference.

As one embodiment, the gNB203 is one flying platform device.

As one embodiment, the gNB203 is a satellite device.

### Embodiment 3

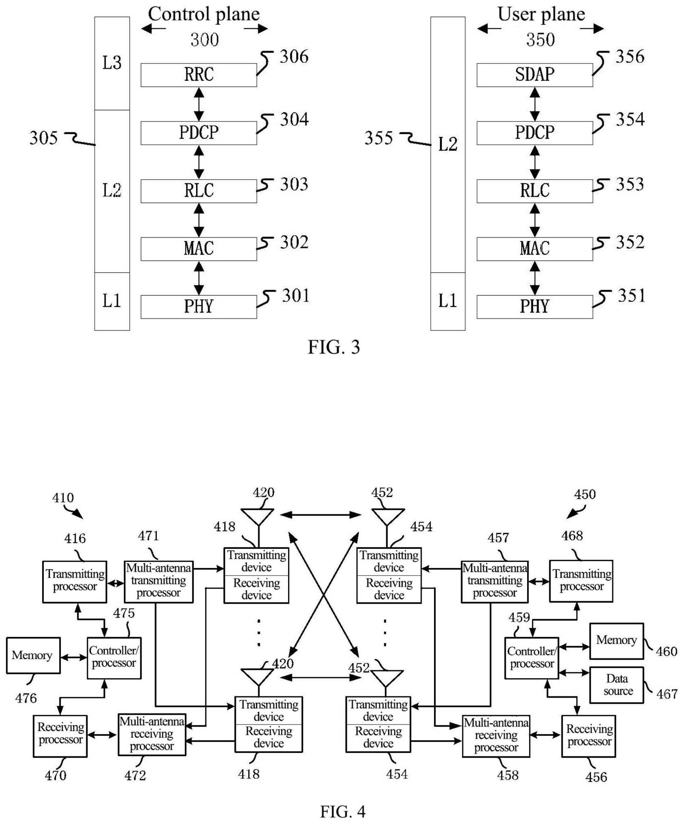

Embodiment 3 shows a schematic diagram of an embodiment of one wireless protocol architecture for a user plane and a control plane according to the present application, as shown in FIG. 3. FIG. 3 is a schematic diagram illustrating an embodiment of a radio protocol architecture for a user plane 350 and a control plane 300, and FIG. 3 shows a radio protocol architecture for a first communication node device (UE, a gNB or an RSU in V2X) and a second communication node device (a gNB, UE or an RSU in V2X), or the control plane 300 between two pieces of UE using three layers: a Layer 1, a Layer 2, and a Layer 3. The Layer 1 (L1 layer) is the lowest layer and implements various PHY (physical layer) signal processing functions. The L1 layer will be referred to as a PHY301 herein. A Layer 2 (L2 layer) 305 is above the PHY301, and is responsible for links between the first communication node device and the second communication node device and two pieces of UE through the PHY301. The L2 layer 305 comprises an MAC (Medium Access Control) sublayer 302, an RLC (Radio Link Control) sublayer 303, and a PDCP (Packet Data Convergence Protocol) sublayer 304, these sublayers terminating at the second communication node device. The PDCP sublayer 304 provides multiplexing between different radio bearers and logical channels. The PDCP sublayer 304 also provides security by encrypting data packets, and provides handover support for the first communication node device between the second communication node devices. The RLC sublayer 303 provides segmentation and reassembling of upper-layer data packets, retransmission of lost data packets, and reordering of data packets to compensate for out-of-order reception due to an HARQ. The MAC sublayer 302 provides multiplexing between logical and transport channels. The MAC sublayer 302 is also responsible for allocating various radio resources (e.g., resource blocks) in one cell between the first communication node devices. The MAC sublayer 302 is also responsible for HARQ operations. An RRC (Radio Resource Control) sublayer 306 in the Layer 3 (L3 layer) in the control plane 300 is responsible for obtaining radio resources (i.e., radio bearers) and configuring lower layers using RRC signaling between the second communication node device and the first communication node device. The radio protocol architecture for the user plane 350 comprises the Layer 1 (L1 layer) and the Layer 2 (L2 layer). The radio protocol architecture for the first communication node device and the second communication node device in the user plane 350 is substantially the same as that for the corresponding layers and sublayers in the control plane 300 for a physical layer 351, a PDCP sublayer 354 in an L2 layer 355, an RLC sublayer 353 in the L2 layer 355, and an MAC sublayer 352 in the L2 layer 355, but the PDCP sublayer 354 also provides header compression for upper-layer data packets to reduce the radio transmission overhead. The L2 layer 355 in the user plane 350 also comprises an SDAP (Service Data Adaptation Protocol) sublayer 356, and the SDAP sublayer 356 is responsible for mapping between a QoS stream and a data radio bearer (DRB) to support the diversity of services. Although not shown in the figure, the first communication node device may have several upper-layers above the L2 layer 355, comprising a network layer (e.g., IP layer) terminating at the P-GW on the network side and an application layer terminating at the other end (e.g., remote UE and a server, etc.) of a connection.

As one embodiment, the wireless protocol architecture in FIG. 3 is applicable to a first node in the present application.

As one embodiment, the wireless protocol architecture in FIG. 3 is applicable to a second node in the present application.

As one embodiment, a first information block in the present application is generated at the RRC sublayer 306.

As one embodiment, the first information block in the present application is generated at the MAC sublayer 302.

As one embodiment, the first information block in the present application is generated at the PHY301.

As one embodiment, first RRC signaling in the present application is generated at the RRC sublayer 306.

As one embodiment, one PUCCH in the present application is generated at the PHY301.

### Embodiment 4

Embodiment 4 shows a schematic diagram of a first communication device and a second communication device according to the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In transmission from the first communication device 410 to the second communication device 450, at the first communication device 410, an upper-layer data packet from a core network is provided to the controller/processor 475. The controller/processor 475 implements the functionality of an L2 layer. In the transmission from the first communication device 410 to the second communication device 450, the controller/processor 475 provides header compression, encryption, packet segmentation and reordering, multiplexing between logical and transport channels, and radio resource allocation to the second communication device 450 based on various priority metrics. The controller/processor 475 is also responsible for the retransmission of lost packets and signaling to the second communication device 450. The transmitting processor 416 and the multi-antenna transmitting processor 471 implement various signal processing functions for an L1 layer (i.e., a physical layer). The transmitting processor 416 implements coding and interleaving to facilitate forward error correction (FEC) at the second communication device 450, as well as mapping of signal constellations based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on coded and modulated symbols to generate one or more spatial streams. The transmitting processor 416 then maps each spatial stream to a subcarrier, multiplexes with a reference signal (e.g., a pilot) in a time domain and/or frequency domain, and then uses an inverse fast Fourier transform (IFFT) to generate a physical channel carrying a time domain multi-carrier symbol stream. The multi-antenna transmitting processor 471 then performs sending analog precoding/beamforming operation on the time domain multi-carrier symbol stream. Each transmitting device 418 converts a baseband multi-carrier symbol stream provided by the multi-antenna transmitting processor 471 into a radio frequency stream, which is then provided to different antennas 420.

In the transmission from the first communication device 410 to the second communication device 450, at the second communication device 450, each receiving device 454 receives a signal through its corresponding antenna 452. Each receiving device 454 recovers information modulated onto a radio frequency carrier, and converts the radio frequency stream into the baseband multi-carrier symbol stream to be provided to the receiving processor 456. The receiving processor 456 and the multi-antenna receiving processor 458 implement various signal processing functions of the L1 layer. The multi-antenna receiving processor 458 performs receiving analog precoding/beamforming operations on the baseband multi-carrier symbol stream from the receiving device 454. The receiving processor 456 uses the fast Fourier transform (FFT) to convert the baseband multi-carrier symbol stream from the time domain to the frequency domain after the receiving analog precoding/beamforming operation. In the frequency domain, a physical layer data signal and the reference signal are demultiplexed by the receiving processor 456, wherein the reference signal will be used for channel estimation, and after the data signal is detected by multiple antennas in the multi-antenna receiving processor 458, any spatial stream destined for the second communication device 450 is recovered. Symbols on each spatial stream are demodulated and recovered in the receiving processor 456, and a soft decision is generated. The receiving processor 456 then decodes and deinterleaves the soft decision to recover upper-layer data and control signals transmitted by the first communication device 410 on the physical channel. The upper-layer data and the control signals are then provided to the controller/processor 459. The controller/processor 459 implements functions of the L2 layer. The controller/processor 459 may be associated with the memory 460 storing program codes and data. The memory 460 may be referred to as a computer-readable medium. In the transmission from the first communication device 410 to the second communication device 450, the controller/processor 459 provides demultiplexing between transmission and logical channels, packet reassembly, decryption, header decompression, and control signal processing to recover upper-layer data packets from the core network. The upper-layer data packets are then provided to all protocol layers above the L2 layer. Various control signals may also be provided to an L3 for L3 processing.

In the transmission from the second communication device 450 to the first communication device 410, at the second communication device 450, the upper-layer data packets are provided to the controller/processor 459 using the data source 467. The data source 467 represents all protocol layers above the L2 layer. Similar to a sending function at the first communication device 410 described in the transmission from the first communication device 410 to the second communication device 450, the controller/processor 459 implements header compression, encryption, packet segmentation and reordering, and multiplexing between logical and transmission channels based on radio resource allocation, and implements the function of the L2 layer for the user plane and the control plane. The controller/processor 459 is also responsible for the retransmission of lost packets and signaling to the first communication device 410. The transmitting processor 468 performs modulation mapping and channel coding processing, and the multi-antenna transmitting processor 457 performs digital multi-antenna spatial precoding, comprising codebook-based precoding and non-codebook-based precoding, and beamforming processing. Then, the transmitting processor 468 modulates the generated spatial stream into a multi-carrier/single-carrier symbol stream, which is provided to different antennas 452 via the transmitting device 454 after undergoing analog precoding/beamforming operation in the multi-antenna transmitting processor 457. Each transmitting device 454 first converts the baseband symbol stream provided by the multi-antenna transmitting processor 457 into the radio frequency stream, which is then provided to different antennas 452.

In the transmission from the second communication device 450 to the first communication device 410, a function at the first communication device 410 is similar to a receiving function at the second communication device 450 described in the transmission from the first communication device 410 to the second communication device 450. Each receiving device 418 receives a radio frequency signal through its corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the functions of the L2 layer. The controller/processor 475 may be associated with the memory 476 storing program codes and data. The memory 476 may be referred to as a computer-readable medium. In the transmission from the second communication device 450 to the first communication device 410, the controller/processor 475 provides demultiplexing between transmission and logical channels, packet reassembly, decryption, header decompression, and control signal processing to recover upper-layer data packets from the UE450. The upper-layer data packets from the controller/processor 475 can be provided to the core network.

As one embodiment, a first node in the present application comprises the second communication device 450, and a second node in the present application comprises the first communication device 410.

As one sub-embodiment of the above embodiment, the first node is user equipment, and the second node is user equipment.

As one sub-embodiment of the above embodiment, the first node is user equipment, and the second node is a relay node.

As one sub-embodiment of the above embodiment, the first node is a relay node, and the second node is user equipment.

As one sub-embodiment of the above embodiment, the first node is user equipment, and the second node is a base station device.

As one sub-embodiment of the above embodiment, the first node is a relay node, and the second node is a base station device.

As one sub-embodiment of the above embodiment, the second node is user equipment, and the first node is a base station device.

As one sub-embodiment of the above embodiment, the second node is a relay node, and the first node is a base station device.

As one sub-embodiment of the above embodiment, the second communication device 450 comprises: at least one controller/processor; and the at least one controller/processor is responsible for HARQ operation.

As one sub-embodiment of the above embodiment, the first communication device 410 comprises: at least one controller/processor; and the at least one controller/processor is responsible for HARQ operation.

As one sub-embodiment of the above embodiment, the first communication device 410 comprises: at least one controller/processor; and the at least one controller/processor is responsible for error detection using positive acknowledgement (ACK) and/or negative acknowledgement (NACK) protocol to support HARQ operation.

As one embodiment, the second communication device 450 comprises: at least one processor and at least one memory, the at least one memory comprising a computer program code; and the at least one memory and the computer program code being configured to be used together with the at least one processor. The second communication device 450 apparatus at least: receives first RRC signaling and a first information block; and sends a first HARQ-ACK bit block on a first PUCCH, the first HARQ-ACK bit block comprising at least one HARQ-ACK bit for a first SPS PDSCH configuration, wherein a target HARQ-ACK bit is one HARQ-ACK bit comprised in the first HARQ-ACK bit block, a first-type symbol is used for determining that the first HARQ-ACK bit block comprises the target HARQ-ACK bit, and the first-type symbol is a symbol that is indicated as a downlink symbol by the first RRC signaling and determined, by the first information block, to be available for uplink transmission; and the target HARQ-ACK bit is an HARQ-ACK bit for a target SPS PDSCH, the target SPS PDSCH is an SPS PDSCH that is associated with the first SPS PDSCH configuration and is other than a first-type SPS PDSCH, and the first-type SPS PDSCH is an SPS PDSCH overlapping the first-type symbol.

As one sub-embodiment of the above embodiment, the second communication device 450 corresponds to the first node in the present application.

As one embodiment, the second communication device 450 comprises: a memory storing a computer-readable instruction program, the computer-readable instruction program generating actions when executed by at least one processor, and the actions comprising: receiving the first RRC signaling and the first information block; and sending the first HARQ-ACK bit block on the first PUCCH, the first HARQ-ACK bit block comprising at least one HARQ-ACK bit for the first SPS PDSCH configuration, wherein the target HARQ-ACK bit is one HARQ-ACK bit comprised in the first HARQ-ACK bit block, the first-type symbol is used for determining that the first HARQ-ACK bit block comprises the target HARQ-ACK bit, and the first-type symbol is a symbol that is indicated as a downlink symbol by the first RRC signaling and determined, by the first information block, to be available for uplink transmission; and the target HARQ-ACK bit is an HARQ-ACK bit for the target SPS PDSCH, the target SPS PDSCH is an SPS PDSCH that is associated with the first SPS PDSCH configuration and is other than the first-type SPS PDSCH, and the first-type SPS PDSCH is an SPS PDSCH overlapping the first-type symbol.

As one sub-embodiment of the above embodiment, the second communication device 450 corresponds to the first node in the present application.

As one embodiment, the first communication device 410 comprises: at least one processor and at least one memory, the at least one memory comprising a computer program code; and the at least one memory and the computer program code being configured to be used together with the at least one processor. The first communication device 410 apparatus at least: sends the first RRC signaling and the first information block; and receives the first HARQ-ACK bit block on the first PUCCH, the first HARQ-ACK bit block comprising at least one HARQ-ACK bit for the first SPS PDSCH configuration, wherein the target HARQ-ACK bit is one HARQ-ACK bit comprised in the first HARQ-ACK bit block, the first-type symbol is used for determining that the first HARQ-ACK bit block comprises the target HARQ-ACK bit, and the first-type symbol is a symbol that is indicated as a downlink symbol by the first RRC signaling and determined, by the first information block, to be available for uplink transmission; and the target HARQ-ACK bit is an HARQ-ACK bit for the target SPS PDSCH, the target SPS PDSCH is an SPS PDSCH that is associated with the first SPS PDSCH configuration and is other than the first-type SPS PDSCH, and the first-type SPS PDSCH is an SPS PDSCH overlapping the first-type symbol.

As one sub-embodiment of the above embodiment, the first communication device 410 corresponds to the second node in the present application.

As one embodiment, the first communication device 410 comprises: a memory storing a computer-readable instruction program, the computer-readable instruction program generating actions when executed by at least one processor, and the actions comprising: sending the first RRC signaling and the first information block; and receiving the first HARQ-ACK bit block on the first PUCCH, the first HARQ-ACK bit block comprising at least one HARQ-ACK bit for the first SPS PDSCH configuration, wherein the target HARQ-ACK bit is one HARQ-ACK bit comprised in the first HARQ-ACK bit block, the first-type symbol is used for determining that the first HARQ-ACK bit block comprises the target HARQ-ACK bit, and the first-type symbol is a symbol that is indicated as a downlink symbol by the first RRC signaling and determined, by the first information block, to be available for uplink transmission; and the target HARQ-ACK bit is an HARQ-ACK bit for the target SPS PDSCH, the target SPS PDSCH is an SPS PDSCH that is associated with the first SPS PDSCH configuration and is other than the first-type SPS PDSCH, and the first-type SPS PDSCH is an SPS PDSCH overlapping the first-type symbol.

As one sub-embodiment of the above embodiment, the first communication device 410 corresponds to the second node in the present application.

As one embodiment, at least one of {the antenna 452, the receiving device 454, the multi-antenna receiving processor 458, the receiving processor 456, the controller/processor 459, the memory 460, and the data source 467} is used for receiving the first information block in the present application.

As one embodiment, at least one of {the antenna 420, the transmitting device 418, the multi-antenna transmitting processor 471, the transmitting processor 416, the controller/processor 475, and the memory 476} is used for sending the first information block in the present application.

As one embodiment, at least one of {the antenna 452, the receiving device 454, the multi-antenna receiving processor 458, the receiving processor 456, the controller/processor 459, the memory 460, and the data source 467} is used for receiving the first RRC signaling in the present application.

As one embodiment, at least one of {the antenna 420, the transmitting device 418, the multi-antenna transmitting processor 471, the transmitting processor 416, the controller/processor 475, and the memory 476} is used for sending the first RRC signaling in the present application.

As one embodiment, at least one of {the antenna 452, the transmitting device 454, the multi-antenna transmitting processor 458, the transmitting processor 468, the controller/processor 459, the memory 460, and the data source 467} is used for sending the first HARQ-ACK bit block in the present application.

As one embodiment, at least one of {the antenna 420, the receiving device 418, the multi-antenna receiving processor 472, the receiving processor 470, the controller/processor 475, and the memory 476} is used for receiving the first HARQ-ACK bit block in the present application.

### Embodiment 5

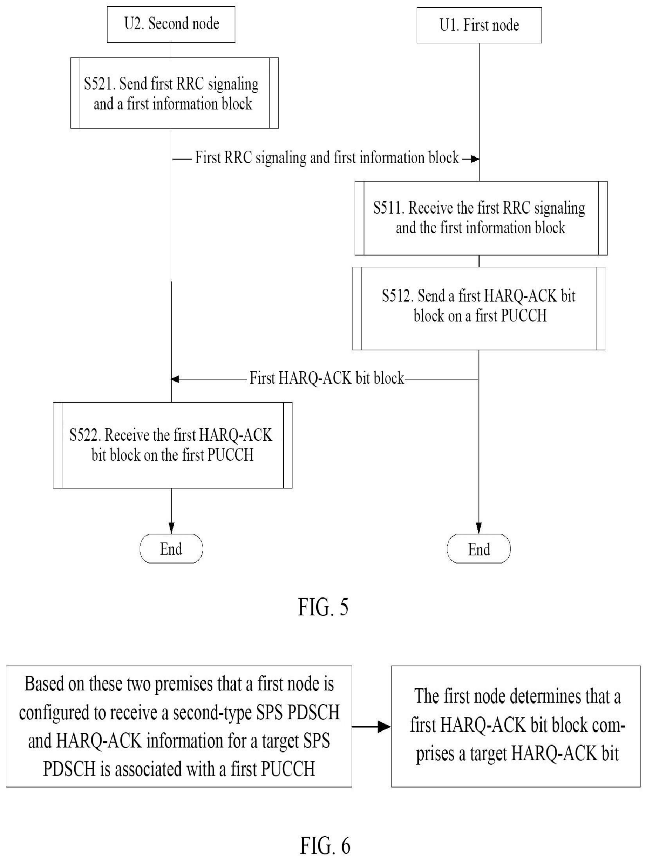

Embodiment 5 illustrates a flowchart of signal transmission according to one embodiment of the present application, as shown in FIG. 5. In FIG. 5, a first node U1 and a second node U2 communicate through an air interface.

The first node U1 receives first RRC signaling and a first information block in step S511; and sends a first HARQ-ACK bit block on a first PUCCH in step S512.

The second node U2 sends the first RRC signaling and the first information block in step S521; and receives the first HARQ-ACK bit block on the first PUCCH in step S522.

In Embodiment 5, the first HARQ-ACK bit block comprises at least one HARQ-ACK bit for a first SPS PDSCH configuration; a target HARQ-ACK bit is one HARQ-ACK bit comprised in the first HARQ-ACK bit block, and a first-type symbol is used for determining that the first HARQ-ACK bit block comprises the target HARQ-ACK bit; based on these two premises that a first node is configured to receive a second-type SPS PDSCH and HARQ-ACK information for a target SPS PDSCH is associated with the first PUCCH, the first node determines that the first HARQ-ACK bit block comprises the target HARQ-ACK bit; the second-type SPS PDSCH is an SPS PDSCH that is associated with the first SPS PDSCH configuration and is other than a first-type SPS PDSCH; the second-type SPS PDSCH is an SPS PDSCH other than a third-type SPS PDSCH, and the third-type SPS PDSCH is an SPS PDSCH that does not need to be received among overlapping SPS PDSCHs; the second-type SPS PDSCH is an SPS PDSCH other than a fourth-type SPS PDSCH, and the fourth-type SPS PDSCH is an SPS PDSCH that does not need to be received based on a UE capability for a number of PDSCH receptions in one slot; the second-type SPS PDSCH is an SPS PDSCH other than a fifth-type SPS PDSCH, and the fifth-type SPS PDSCH is an SPS PDSCH that does not need to be received due to overlapping a symbol(s) that is (are) indicated as an uplink symbol(s) by tdd-UL-DL-ConfigurationCommon or tdd-UL-DL-ConfigurationDedicated; the first RRC signaling is tdd-UL-DL-ConfigurationCommon and the first-type symbol is a symbol that is indicated as a downlink symbol by the first RRC signaling and determined, by the first information block, to be available for uplink transmission, or the first-type symbol is a symbol that is indicated as a downlink symbol by the first RRC signaling and indicated as an uplink symbol by the first information block; the target HARQ-ACK bit is an HARQ-ACK bit for the target SPS PDSCH, the target SPS PDSCH is an SPS PDSCH that is associated with the first SPS PDSCH configuration and is other than the first-type SPS PDSCH, and the first-type SPS PDSCH is an SPS PDSCH overlapping the first-type symbol; and the first PUCCH is used only for sending HARQ-ACK information for an SPS PDSCH.

As one sub-embodiment of Embodiment 5, the target SPS PDSCH belongs to the second-type SPS PDSCH; and the second-type SPS PDSCH is an SPS PDSCH in a first slot set on a first serving cell, the first slot set comprises a first slot, and the first slot is a downlink slot for an SPS PDSCH having HARQ-ACK information that is multiplexed to the first PUCCH on the first serving cell.

As one sub-embodiment of Embodiment 5, a first frequency band configuration is used for determining a frequency domain resource that is allocated to an uplink, and the first frequency band configuration is used for determining that at least one symbol that is indicated as a downlink symbol by the first RRC signaling belongs to the first-type symbol.

As one sub-embodiment of Embodiment 5, the first frequency band configuration is used for determining a frequency domain resource that is allocated to an uplink, and at least a part of a frequency domain resource allocation corresponding to an SPS PDSCH belonging to the first-type SPS PDSCH is comprised in the frequency domain resource that is allocated to the uplink as determined by the first frequency band configuration.

As one sub-embodiment of Embodiment 5, at least a part of a frequency domain resource allocation corresponding to an SPS PDSCH belonging to the first-type SPS PDSCH is comprised in a first frequency domain resource, and the first frequency domain resource is a frequency domain resource other than a frequency domain resource that is allocated to a downlink.

As one embodiment, the first node performs reception in the target SPS PDSCH.

As one embodiment, the first node performs reception in the second-type SPS PDSCH.

As one embodiment, the first node does not perform reception in one SPS PDSCH belonging to the second-type SPS PDSCH.

As one embodiment, the first node U1 is the first node in the present application.

As one embodiment, the second node U2 is a second node in the present application.

As one embodiment, the first node U1 is one piece of UE.

As one embodiment, the second node U2 is one base station.

As one embodiment, an air interface between the second node U2 and the first node U1 is a Uu interface.

As one embodiment, an air interface between the second node U2 and the first node U1 comprises a cellular link.

As one embodiment, an air interface between the second node U2 and the first node U1 comprises a wireless interface between a base station device and user equipment.

As one embodiment, an air interface between the second node U2 and the first node U1 comprises a wireless interface between a satellite device and user equipment.

As one embodiment, an air interface between the second node U2 and the first node U1 comprises a wireless interface between user equipment and user equipment.

As one embodiment, a problem to be solved by the present application comprises: how to improve feedback efficiency of HARQ-ACK information for an SPS PDSCH.

As one embodiment, a problem to be solved by the present application comprises: how to improve using efficiency of an uplink resource.

As one embodiment, a problem to be solved by the present application comprises: how to reduce resource overhead of a PUCCH or improve transmission performance of a PUCCH.

As one embodiment, a problem to be solved by the present application comprises: how to save feedback overhead for unnecessary HARQ-ACK bits.

As one embodiment, a problem to be solved by the present application comprises: how to determine the first HARQ-ACK bit block.

As one embodiment, a problem to be solved by the present application comprises: what is a relationship between the first-type symbol and the first HARQ-ACK bit block.

As one embodiment, a problem to be solved by the present application comprises: how to determine an HARQ-ACK bit for an SPS PDSCH in the first HARQ-ACK bit block based on the first-type symbol.

As one embodiment, a problem to be solved by the present application comprises: after configuring a symbol that is indicated as a downlink symbol by the first RRC signaling and determined as a symbol available for uplink transmission by the first information block, how to determine an HARQ-ACK codebook only for an SPS PDSCH to optimize feedback of an HARQ-ACK bit.

### Embodiment 6

Embodiment 6 illustrates a schematic diagram illustrating that a first node determines that a first HARQ-ACK bit block comprises a target HARQ-ACK bit according to one embodiment of the present application, as shown in FIG. 6.

In Embodiment 6, based on these two premises that the first node is configured to receive a second-type SPS PDSCH and HARQ-ACK information for a target SPS PDSCH is associated with a first PUCCH, the first node determines that the first HARQ-ACK bit block comprises the target HARQ-ACK bit; and the second-type SPS PDSCH is an SPS PDSCH that is associated with a first SPS PDSCH configuration and is other than a first-type SPS PDSCH.

As one embodiment, the HARQ-ACK information for the target SPS PDSCH is HARQ-ACK information used for indicating whether a transport block in the target SPS PDSCH is correctly decoded.

As one embodiment, the HARQ-ACK information for the target SPS PDSCH is an ACK/NACK that is generated based on a decoding result of a transport block in the target SPS PDSCH.

As one embodiment, the first PUCCH is a PUCCH used for sending the HARQ-ACK information for the target SPS PDSCH.

As one embodiment, according to an indication of a DCI format used for activating the target SPS PDSCH, when the HARQ-ACK information for the target SPS PDSCH needs to be sent, the first PUCCH is a PUCCH used for sending the HARQ-ACK information for the target SPS PDSCH.

As one embodiment, the first PUCCH is reserved for sending of UCI (Uplink control information) comprising at least HARQ-ACK information for the target SPS PDSCH.

As one embodiment, the first PUCCH is a PUCCH for multiplexing HARQ-ACK information comprising at least the HARQ-ACK information for the target SPS PDSCH.

As one embodiment, the second-type SPS PDSCH is an SPS PDSCH in a first slot set on a first serving cell, the first slot set comprises a first slot, and the first slot is a downlink slot for an SPS PDSCH having HARQ-ACK information that is multiplexed to the first PUCCH on the first serving cell.

As one embodiment, the first slot set comprises only the first slot.

As one embodiment, the first slot set comprises more than one slot.

As one embodiment, the first slot set is configurable.

As one embodiment, the target SPS PDSCH is an SPS PDSCH in the first slot.

As one embodiment, the target SPS PDSCH is not an SPS PDSCH in the first slot.

As one embodiment, the target SPS PDSCH is one SPS PDSCH in the second-type SPS PDSCH.

As one embodiment, the first slot set consists of these slots from a slot n - M + 1 to a slot n, n is a slot index of the first slot, the slot n is the first slot, and M is configurable.

As one embodiment, M is equal to 1 or greater than 1.

As one embodiment, M is configured by one parameter in sps-Config.

As one embodiment, M is configured by pdsch-AggregationFactor- r16.

As one embodiment, M is configured by pdsch- AggregationFactor.

As one embodiment, M is configured by one parameter in pdsch-config.

As one embodiment, the first serving cell is one serving cell configured to the first node.

As one embodiment, a serving cell index of the first serving cell is equal to 0.

As one embodiment, a serving cell index of the first serving cell is greater than 0.

As one embodiment, the second-type SPS PDSCH is an SPS PDSCH other than a third-type SPS PDSCH, and the third-type SPS PDSCH is an SPS PDSCH that does not need to be received among overlapping SPS PDSCHs.

As one embodiment, the second-type SPS PDSCH is an SPS PDSCH other than a fourth-type SPS PDSCH, and the fourth-type SPS PDSCH is an SPS PDSCH that does not need to be received based on a UE capability for a number of PDSCH receptions in one slot.

As one embodiment, the second-type SPS PDSCH is an SPS PDSCH other than a fifth-type SPS PDSCH, and the fifth-type SPS PDSCH is an SPS PDSCH overlapping a symbol(s) that is (are) indicated as an uplink symbol(s) by tdd-UL-DL-ConfigurationCommon or tdd-UL-DL-ConfigurationDedicated.

As one embodiment, the second-type SPS PDSCH is an SPS PDSCH other than the fifth-type SPS PDSCH, and the fifth-type SPS PDSCH is an SPS PDSCH that does not need to be received due to overlapping a symbol(s) that is (are) indicated as an uplink symbol(s) by tdd-UL-DL-ConfigurationCommon or tdd-UL-DL-ConfigurationDedicated.

As one embodiment, the second-type SPS PDSCH is an SPS PDSCH other than a sixth-type SPS PDSCH, the sixth-type SPS PDSCH is an SPS PDSCH overlapping a second-type symbol, and the second-type symbol is a symbol(s) that is (are) indicated as a flexible symbol(s) by tdd-UL-DL-ConfigurationCommon.

As one embodiment, the second-type SPS PDSCH is an SPS PDSCH other than the sixth-type SPS PDSCH, the sixth-type SPS PDSCH is an SPS PDSCH that does not need to be received due to overlapping the second-type symbol, and the second-type symbol is a symbol that is indicated as a flexible symbol by tdd-UL-DL-ConfigurationCommon.

As one embodiment, the second-type SPS PDSCH is an SPS PDSCH other than the sixth-type SPS PDSCH, the sixth-type SPS PDSCH is an SPS PDSCH overlapping the second-type symbol, and the second-type symbol is a symbol that is indicated as a flexible symbol by tdd-UL-DL-ConfigurationCommon or tdd-UL-DL-ConfigurationDedicated.

As one embodiment, the second-type SPS PDSCH is an SPS PDSCH other than the sixth-type SPS PDSCH, the sixth-type SPS PDSCH is an SPS PDSCH that does not need to be received due to overlapping the second-type symbol, and the second-type symbol is a symbol that is indicated as a flexible symbol by tdd-UL-DL-ConfigurationCommon or tdd-UL-DL-ConfigurationDedicated.

As one embodiment, a first information block is used for determining the second-type symbol.

As one embodiment, the first information block is used for configuring the second-type symbol.

As one embodiment, the first information block is used for indicating the second-type symbol.

As one embodiment, the second-type symbol is a symbol that is indicated as a flexible symbol by first RRC signaling and indicated as a symbol other than a downlink symbol by the first information block.

As one embodiment, the second-type symbol is a symbol that is indicated as a flexible symbol by the first RRC signaling and indicated to be for full-duplex operation by the first information block.

As one embodiment, the second-type symbol is a symbol that is indicated as a flexible symbol by the first RRC signaling and indicated to be for subband non-overlapping full-duplex operation by the first information block.

As one embodiment, the second-type symbol is a symbol that is indicated as a flexible symbol by the first RRC signaling and indicated as a symbol available for uplink transmission by the first information block.

### Embodiment 7

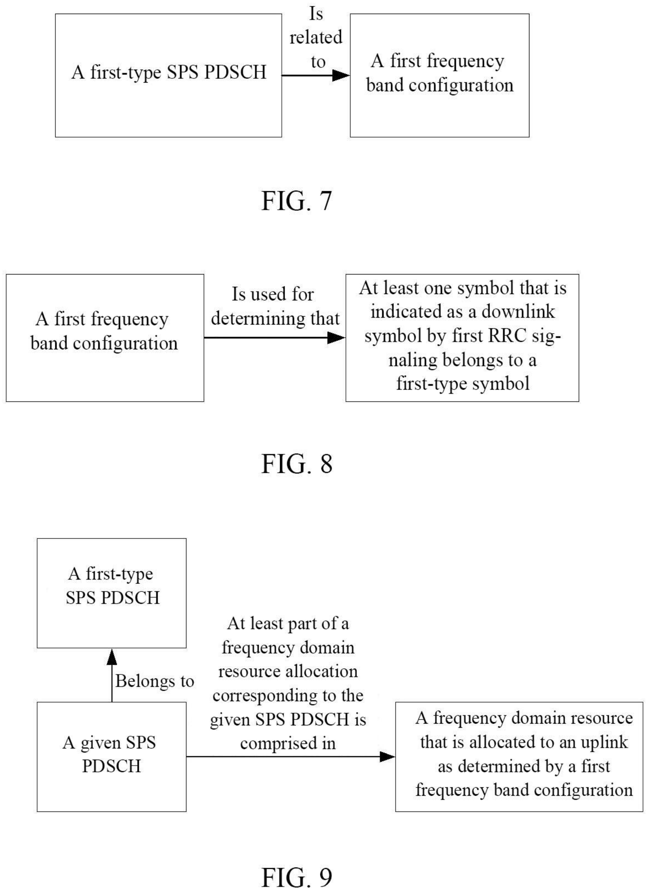

Embodiment 7 illustrates a schematic diagram of a relationship between a first-type SPS PDSCH and a first frequency band configuration according to one embodiment of the present application, as shown in FIG. 7.

In Embodiment 7, the first-type SPS PDSCH is related to the first frequency band configuration.

As one embodiment, the first-type SPS PDSCH depends on the first frequency band configuration.

As one embodiment, the first-type SPS PDSCH is related to a frequency domain resource that is allocated to a downlink as determined by the first frequency band configuration.

As one embodiment, the first-type SPS PDSCH is related to a frequency domain resource that is allocated to an uplink as determined by the first frequency band configuration.

As one embodiment, the meaning of the statement of "determined by the first frequency band configuration" is: configured by the first frequency band configuration.

As one embodiment, the meaning of the statement of "determined by the first frequency band configuration" is: indicated by the first frequency band configuration.

As one embodiment, the meaning of the statement of "determined by the first frequency band configuration" is: known according to the first frequency band configuration.

As one embodiment, a frequency domain resource that is allocated to an uplink comprises a frequency domain resource available for uplink transmission.

As one embodiment, a frequency domain resource that is allocated to an uplink comprises at least one uplink subband.

As one embodiment, the first frequency band configuration is used for determining the first-type SPS PDSCH.

As one embodiment, the first frequency band configuration comprises a configuration of at least one parameter other than a first information block.

As one embodiment, the first frequency band configuration is a configuration of an RRC layer.

As one embodiment, the first frequency band configuration is a configuration of an MAC layer.

As one embodiment, the first frequency band configuration is a frequency band configuration for one serving cell.

As one embodiment, the first frequency band configuration is a frequency band configuration for one BWP.

As one embodiment, the first frequency band configuration is used for configuring a frequency domain resource.

As one embodiment, the first frequency band configuration is used for determining a frequency domain resource that is allocated to an uplink.

As one embodiment, the first frequency band configuration comprises a frequency band configuration for an uplink.

As one embodiment, the first frequency band configuration indicates an RB that is allocated to an uplink in at least a first-type symbol.

As one embodiment, the first frequency band configuration indicates a bandwidth that is allocated to an uplink in at least the first-type symbol.

As one embodiment, the first frequency band configuration is used for determining a first frequency band, and the first frequency band is allocated to an uplink in at least the first-type symbol.

As one embodiment, the first frequency band configuration is used for determining the first frequency band, and the first frequency band is a frequency domain resource that is allocated to an uplink.

As one embodiment, the first frequency band configuration indicates the first frequency band.

As one embodiment, the first frequency band configuration explicitly indicates the first frequency band.

As one embodiment, the first frequency band configuration implicitly indicates the first frequency band.

As one embodiment, the first frequency band configuration indicates a bandwidth of the first frequency band.

As one embodiment, the first frequency band configuration explicitly indicates a bandwidth of the first frequency band.

As one embodiment, the first frequency band configuration implicitly indicates a bandwidth of the first frequency band.

As one embodiment, the first frequency band configuration indicates an RB(s) (Resource Block(s)) occupied by the first frequency band.

As one embodiment, the first frequency band configuration explicitly indicates an RB occupied by the first frequency band.

As one embodiment, the first frequency band configuration implicitly indicates an RB occupied by the first frequency band.

As one embodiment, the first frequency band belongs to one BWP.

As one embodiment, the first frequency band comprises at least one RB.

As one embodiment, one of the RBs in the present application comprises 12 consecutive subcarriers in the frequency domain.

As one embodiment, one of the RBs in the present application is a CRB (Common resource block).

As one embodiment, one of the RBs in the present application is a PRB (Physical resource block).

As one embodiment, one of the RBs in the present application is a VRB (Virtual resource block).

As one embodiment, a first SPS PDSCH configuration is for a first BWP, and the first frequency band configuration is used for determining the first frequency band; and based on the first frequency band configuration, the first frequency band comprises each RB in the first BWP.

As one embodiment, the first SPS PDSCH configuration is for the first BWP, and the first frequency band configuration is used for determining the first frequency band; and based on the first frequency band configuration, a frequency domain resource occupied by the first frequency band is the same as a frequency domain resource occupied by the first BWP.

As one embodiment, the first frequency band configuration is used for determining a frequency domain resource that is allocated to a downlink.

As one embodiment, the first frequency band configuration is used for indicating a frequency domain resource that is allocated to a downlink.

As one embodiment, the first frequency band configuration comprises a frequency band configuration for a downlink.

As one embodiment, the first frequency band configuration indicates an RB that is allocated to a downlink in at least the first-type symbol.

As one embodiment, the first frequency band configuration indicates a bandwidth that is allocated to a downlink in at least the first-type symbol.

As one embodiment, the first frequency band configuration comprises frequency domain configuration information of at least one guard band, the at least one guard band not belonging to a frequency domain resource that is allocated to a downlink in the frequency domain.

As one embodiment, at least a part of a frequency domain resource allocation corresponding to an SPS PDSCH belonging to the first-type SPS PDSCH is comprised in a first frequency domain resource, and the first frequency domain resource is a frequency domain resource other than a frequency domain resource that is allocated to a downlink as determined by the first frequency band configuration.

As one embodiment, at least a part of a frequency domain resource allocation corresponding to an SPS PDSCH belonging to the first-type SPS PDSCH is comprised in the first frequency domain resource, and the first frequency domain resource is a frequency domain resource other than a frequency domain resource that is allocated to a downlink as indicated by the first frequency band configuration.

As one embodiment, a frequency domain resource allocation corresponding to an SPS PDSCH belonging to the first-type SPS PDSCH overlaps the first frequency domain resource in the frequency domain, and the first frequency domain resource is a frequency domain resource other than a frequency domain resource that is allocated to a downlink as determined by the first frequency band configuration.

As one embodiment, a frequency domain resource allocation corresponding to an SPS PDSCH belonging to the first-type SPS PDSCH overlaps the first frequency domain resource in the frequency domain, and the first frequency domain resource is a frequency domain resource other than a frequency domain resource that is allocated to a downlink as indicated by the first frequency band configuration.

As one embodiment, a frequency domain resource allocation corresponding to an SPS PDSCH belonging to the first-type SPS PDSCH overlaps the first frequency domain resource in the frequency domain, and the first frequency domain resource is a frequency domain resource that is indicated by the first frequency band configuration and is not used for receiving at least the SPS PDSCH.

As one embodiment, a frequency domain resource allocation corresponding to an SPS PDSCH belonging to the first-type SPS PDSCH overlaps the first frequency domain resource in the frequency domain, and the first frequency domain resource is a frequency domain resource that is determined by the first frequency band configuration and is not used for receiving at least the SPS PDSCH.

As one embodiment, at least a part of a frequency domain resource allocation corresponding to an SPS PDSCH belonging to the first-type SPS PDSCH is comprised in the first frequency domain resource, and the first frequency domain resource is a frequency domain resource that is indicated by the first frequency band configuration and is not used for receiving at least the SPS PDSCH.

As one embodiment, at least a part of a frequency domain resource allocation corresponding to an SPS PDSCH belonging to the first-type SPS PDSCH is comprised in the first frequency domain resource, and the first frequency domain resource is a frequency domain resource that is determined by the first frequency band configuration and is not used for receiving at least the SPS PDSCH.

As one embodiment, a frequency domain resource allocation corresponding to an SPS PDSCH belonging to the first-type SPS PDSCH overlaps the first frequency domain resource in the frequency domain, and the first frequency domain resource is a frequency domain resource that is indicated by the first frequency band configuration and is not used for receiving at least the SPS PDSCH in the first-type symbol.

As one embodiment, a frequency domain resource allocation corresponding to an SPS PDSCH belonging to the first-type SPS PDSCH overlaps the first frequency domain resource in the frequency domain, and the first frequency domain resource is a frequency domain resource that is determined by the first frequency band configuration and is not used for receiving at least the SPS PDSCH in the first-type symbol.

As one embodiment, at least a part of a frequency domain resource allocation corresponding to an SPS PDSCH belonging to the first-type SPS PDSCH is comprised in the first frequency domain resource, and the first frequency domain resource is a frequency domain resource that is indicated by the first frequency band configuration and is not used for receiving at least the SPS PDSCH in the first-type symbol.

As one embodiment, at least a part of a frequency domain resource allocation corresponding to an SPS PDSCH belonging to the first-type SPS PDSCH is comprised in the first frequency domain resource, and the first frequency domain resource is a frequency domain resource that is determined by the first frequency band configuration and is not used for receiving at least the SPS PDSCH in the first-type symbol.

As one embodiment, the meaning of the statement of "an SPS PDSCH belonging to the first-type SPS PDSCH" is: any SPS PDSCH belonging to the first-type SPS PDSCH.

As one embodiment, a frequency domain resource allocation corresponding to one SPS PDSCH is: a frequency domain resource that is allocated to this SPS PDSCH.

As one embodiment, a frequency domain resource that is allocated to a downlink comprises a frequency domain resource available for downlink transmission.

As one embodiment, a frequency domain resource other than a frequency domain resource that is allocated to a downlink comprises at least one of a frequency domain resource that is allocated to an uplink or a guard band.

As one embodiment, a frequency domain resource other than a frequency domain resource that is allocated to a downlink does not comprise any frequency domain resource available for downlink transmission.

As one embodiment, the first frequency band configuration is used for determining a plurality of subbands, and one of the plurality of subbands is a frequency domain resource that is allocated to a downlink.

As one embodiment, the first frequency band configuration is used for determining a plurality of subbands, and one of the plurality of subbands is a frequency domain resource other than a frequency domain resource that is allocated to a downlink.

As one embodiment, a frequency domain resource allocation corresponding to an SPS PDSCH belonging to the first-type SPS PDSCH is comprised in a frequency domain resource that is allocated to a downlink as configured/indicated by the first frequency band configuration.

As one sub-embodiment of the above embodiment, benefits of the above method comprise: remarkably reducing complexity of system design.

As one embodiment, this situation that at least part of a frequency domain resource allocation corresponding to an SPS PDSCH belonging to the first-type SPS PDSCH is other than a frequency domain resource that is allocated to a downlink as configured/indicated by the first frequency band configuration is not expected.

As one sub-embodiment of the above embodiment, the benefits of the above method comprise: remarkably reducing complexity of system design.

As one embodiment, a restriction on a frequency domain resource allocation corresponding to an SPS PDSCH belonging to the first-type SPS PDSCH is related to the first frequency domain resource, the frequency domain resource allocation corresponding to the SPS PDSCH belonging to the first-type SPS PDSCH does not overlap the first frequency domain resource in the frequency domain, and the first frequency domain resource is a frequency domain resource that is configured/indicated by the first frequency band configuration and is not used for receiving at least the SPS PDSCH in the first-type symbol.

As one sub-embodiment of the above embodiment, the benefits of the above method comprise: remarkably reducing complexity of system design.

As one embodiment, a restriction on a frequency domain resource allocation corresponding to an SPS PDSCH belonging to the first-type SPS PDSCH is related to the first frequency domain resource. The frequency domain resource allocation corresponding to the SPS PDSCH belonging to the first-type SPS PDSCH is comprised in a frequency domain resource other than the first frequency domain resource. The first frequency domain resource is a frequency domain resource that is configured/indicated by the first frequency band configuration and is not used for receiving at least the SPS PDSCH in the first-type symbol.

As one sub-embodiment of the above embodiment, the benefits of the above method comprise: remarkably reducing complexity of system design.

As one embodiment, this situation that a frequency domain resource allocation corresponding to an SPS PDSCH belonging to the first-type SPS PDSCH overlaps the first frequency domain resource in the frequency domain is not expected, and the first frequency domain resource is a frequency domain resource that is configured/indicated by the first frequency band configuration and is not used for receiving at least the SPS PDSCH in the first-type symbol.

As one sub-embodiment of the above embodiment, the benefits of the above method comprise: remarkably reducing complexity of system design.

As one embodiment, this situation that at least part of a frequency domain resource allocation corresponding to an SPS PDSCH belonging to the first-type SPS PDSCH is in the first frequency domain resource is not expected, and the first frequency domain resource is a frequency domain resource that is configured/indicated by the first frequency band configuration and is not used for receiving at least the SPS PDSCH in the first-type symbol.

As one sub-embodiment of the above embodiment, the benefits of the above method comprise: remarkably reducing complexity of system design.

As one embodiment, the first frequency domain resource comprises at least one subcarrier.

As one embodiment, the first frequency domain resource comprises at least one RB.

As one embodiment, the first frequency domain resource is consecutive in the frequency domain.

As one embodiment, the first frequency domain resource is inconsecutive in the frequency domain.

As one embodiment, the first SPS PDSCH configuration is for the first BWP, and a frequency domain resource that is allocated to a downlink as configured/indicated by the first frequency band configuration is a proper subset of a frequency domain resource occupied by the first BWP.

### Embodiment 8

Embodiment 8 illustrates a schematic diagram of a relationship between a first frequency band configuration and a first-type symbol according to one embodiment of the present application, as shown in FIG. 8.

In Embodiment 8, the first frequency band configuration is used for determining that at least one symbol that is indicated as a downlink symbol by first RRC signaling belongs to the first-type symbol.

As one embodiment, the first frequency band configuration is a configuration of at least one parameter in a first information block.

As one embodiment, the first frequency band configuration is a configuration for at least one field in the first information block.

As one embodiment, based on the first frequency band configuration, a first node determines that at least one symbol that is indicated as a downlink symbol by the first RRC signaling belongs to the first-type symbol.

As one embodiment, the first frequency band configuration implicitly indicates at least one symbol that is indicated as a downlink symbol by the first RRC signaling as the first-type symbol.

As one embodiment, the first frequency band configuration is used for determining a first frequency band; and according to a predefined mapping rule between a bandwidth and a symbol, a bandwidth of the first frequency band is used for indicating at least one symbol that is indicated as a downlink symbol by the first RRC signaling as the first-type symbol.

As one embodiment, the first frequency band configuration is used for determining the first frequency band; and according to a predefined mapping rule between an RB and a symbol, a starting RB of the first frequency band is used for indicating at least one symbol that is indicated as a downlink symbol by the first RRC signaling as the first-type symbol.

### Embodiment 9

Embodiment 9 illustrates a schematic diagram of a relationship among a given SPS PDSCH, a first-type SPS PDSCH, and a first frequency band configuration according to one embodiment of the present application, as shown in FIG. 9.

In Embodiment 9, the given SPS PDSCH is an SPS PDSCH belonging to the first-type SPS PDSCH, and at least a part of a frequency domain resource allocation corresponding to the given SPS PDSCH is comprised in a frequency domain resource that is allocated to an uplink as determined by the first frequency band configuration.

As one embodiment, the given SPS PDSCH is any SPS PDSCH belonging to the first-type SPS PDSCH.

As one embodiment, a frequency domain resource allocation corresponding to one SPS PDSCH is: a frequency domain resource that is allocated to this SPS PDSCH.

As one embodiment, a frequency domain resource allocation corresponding to an SPS PDSCH belonging to the first-type SPS PDSCH overlaps the frequency domain resource that is allocated to an uplink as determined by the first frequency band configuration in the frequency domain.

As one embodiment, a first SPS PDSCH configuration is for a first BWP, and the first frequency band configuration is used for determining a first frequency band; and based on the first frequency band configuration, a frequency domain resource occupied by the first frequency band is a proper subset of a frequency domain resource occupied by the first BWP.

As one embodiment, the first SPS PDSCH configuration is for the first BWP, and the first frequency band configuration is used for determining the first frequency band; and based on the first frequency band configuration, an RB comprised in the first frequency band is a proper subset of an RB comprised in the first BWP.

As one embodiment, the first SPS PDSCH configuration is for the first BWP, and the first frequency band configuration is used for determining the first frequency band; and based on the first frequency band configuration, the first frequency band comprises at least one RB in the first BWP, and at least one RB in the first frequency band does not belong to the first BWP, and at least one RB in the first BWP does not belong to the first frequency band.

As one embodiment, the first frequency band configuration is used for determining a plurality of subbands, and the first frequency band is one of the plurality of subbands.

As one embodiment, each subband among the plurality of subbands comprises at least one RB.

As one embodiment, the plurality of subbands do not overlap each other in the frequency domain.

As one embodiment, the first frequency band configuration divides the plurality of subbands by indicating a frequency domain starting position of at least one subband and a bandwidth of the at least one subband.

As one embodiment, the first frequency band configuration divides the plurality of subbands by indicating a frequency domain starting position of at least one guard band and a bandwidth of the at least one guard band.

As one embodiment, the first frequency band configuration divides the plurality of subbands by indicating a frequency domain starting position of at least one guard band and a bandwidth of at least one subband.

As one embodiment, the first frequency band configuration divides the plurality of subbands by indicating a frequency domain starting position of at least one subband and a bandwidth of at least one guard band.

As one embodiment, the first frequency band configuration is used for dividing at least a part of the first BWP into the plurality of subbands.

As one embodiment, the first frequency band configuration is used for dividing a frequency domain resource comprising the first BWP into the plurality of subbands.

As one embodiment, the first SPS PDSCH configuration is for the first BWP.

As one embodiment, the first SPS PDSCH configuration is comprised in a configuration of the first BWP.

### Embodiment 10

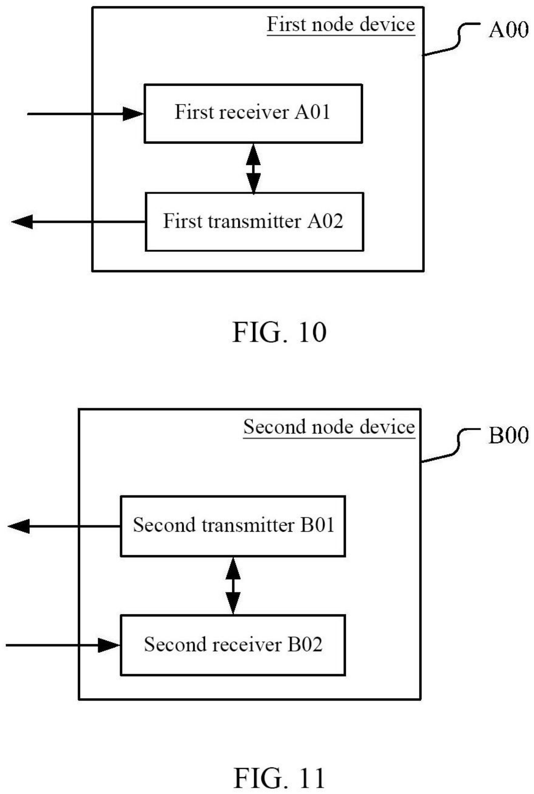

Embodiment 10 illustrates a structural block diagram of a processing apparatus in a first node device, as shown in FIG. 10. In FIG. 10, a processing apparatus A00 of the first node device comprises a first receiver A01 and a first transmitter A02.

As one embodiment, the first node device A00 is user equipment.

As one embodiment, the first node device A00 is a relay node.

As one embodiment, the first node device A00 is a vehicle-mounted communication device.

As one embodiment, the first node device A00 is conventional user equipment.

As one embodiment, the first node device A00 is user equipment supporting full-duplex operation.

As one embodiment, the first node device A00 is user equipment supporting an operation related to network energy saving.

As one embodiment, the first node device A00 is user equipment not supporting full-duplex operation.

As one embodiment, the first node device A00 is user equipment not supporting an operation related to network energy saving.

As one embodiment, the first receiver A01 comprises at least one of an antenna 452, a receiving device 454, a multi-antenna receiving processor 458, a receiving processor 456, a controller/processor 459, a memory 460, and a data source 467 in FIG. 4 of the present application.

As one embodiment, the first receiver A01 comprises at least the first five of the antenna 452, the receiving device 454, the multi-antenna receiving processor 458, the receiving processor 456, the controller/processor 459, the memory 460, and the data source 467 in FIG. 4 of the present application.

As one embodiment, the first receiver A01 comprises at least the first four of the antenna 452, the receiving device 454, the multi-antenna receiving processor 458, the receiving processor 456, the controller/processor 459, the memory 460, and the data source 467 in FIG. 4 of the present application.

As one embodiment, the first receiver A01 comprises at least the first three of the antenna 452, the receiving device 454, the multi-antenna receiving processor 458, the receiving processor 456, the controller/processor 459, the memory 460, and the data source 467 in FIG. 4 of the present application.

As one embodiment, the first receiver A01 comprises at least the first two of the antenna 452, the receiving device 454, the multi-antenna receiving processor 458, the receiving processor 456, the controller/processor 459, the memory 460, and the data source 467 in FIG. 4 of the present application.

As one embodiment, the first transmitter A02 comprises at least one of the antenna 452, a transmitting device 454, a multi-antenna transmitting device processor 457, a transmitting processor 468, the controller/processor 459, the memory 460, and the data source 467 in FIG. 4 of the present application.

As one embodiment, the first transmitter A02 comprises at least the first five of the antenna 452, the transmitting device 454, the multi-antenna transmitting device processor 457, the transmitting processor 468, the controller/processor 459, the memory 460, and the data source 467 in FIG. 4 of the present application.

As one embodiment, the first transmitter A02 comprises at least the first four of the antenna 452, the transmitting device 454, the multi-antenna transmitting device processor 457, the transmitting processor 468, the controller/processor 459, the memory 460, and the data source 467 in FIG. 4 of the present application.

As one embodiment, the first transmitter A02 comprises at least the first three of the antenna 452, the transmitting device 454, the multi-antenna transmitting device processor 457, the transmitting processor 468, the controller/processor 459, the memory 460, and the data source 467 in FIG. 4 of the present application.

As one embodiment, the first transmitter A02 comprises at least the first two of the antenna 452, the transmitting device 454, the multi-antenna transmitting device processor 457, the transmitting processor 468, the controller/processor 459, the memory 460, and the data source 467 in FIG. 4 of the present application.

As one embodiment, the first receiver A01 receives first RRC signaling and a first information block; and the first transmitter A02 sends a first HARQ-ACK bit block on a first PUCCH, the first HARQ-ACK bit block comprising at least one HARQ-ACK bit for a first SPS PDSCH configuration, wherein a target HARQ-ACK bit is one HARQ-ACK bit comprised in the first HARQ-ACK bit block, a first-type symbol is used for determining that the first HARQ-ACK bit block comprises the target HARQ-ACK bit, and the first-type symbol is a symbol that is indicated as a downlink symbol by the first RRC signaling and determined, by the first information block, to be available for uplink transmission; and the target HARQ-ACK bit is an HARQ-ACK bit for a target SPS PDSCH, the target SPS PDSCH is an SPS PDSCH that is associated with the first SPS PDSCH configuration and is other than a first-type SPS PDSCH, and the first-type SPS PDSCH is an SPS PDSCH overlapping the first-type symbol.

As one embodiment, the first RRC signaling is tdd-UL-DL-ConfigurationCommon.

As one embodiment, the first-type symbol is a symbol that is indicated as a downlink symbol by the first RRC signaling and indicated as an uplink symbol by the first information block.

As one embodiment, based on these two premises that a first node is configured to receive a second-type SPS PDSCH and HARQ-ACK information for the target SPS PDSCH is associated with the first PUCCH, the first node determines that the first HARQ-ACK bit block comprises the target HARQ-ACK bit; and the second-type SPS PDSCH is an SPS PDSCH that is associated with the first SPS PDSCH configuration and is other than the first-type SPS PDSCH.

As one embodiment, the first-type SPS PDSCH is related to a first frequency band configuration, and the first frequency band configuration is used for determining a frequency domain resource that is allocated to an uplink.

As one embodiment, the first frequency band configuration is used for determining that at least one symbol that is indicated as a downlink symbol by the first RRC signaling belongs to the first-type symbol.

As one embodiment, at least a part of a frequency domain resource allocation corresponding to an SPS PDSCH belonging to the first-type SPS PDSCH is comprised in a frequency domain resource that is allocated to an uplink as determined by the first frequency band configuration.

As one embodiment, the first PUCCH is used only for sending HARQ-ACK information for an SPS PDSCH that is associated with a first-type RNTI, and the first-type RNTI is a CS-RNTI or a G-CS-RNTI having enabled HARQ-ACK information reporting.

### Embodiment 11

Embodiment 11 illustrates a structural block diagram of a processing apparatus in a second node device, as shown in FIG. 11. In FIG. 11, a processing apparatus B00 of the second node device comprises a second transmitter B01 and a second receiver B02.

As one embodiment, a second node device B00 is user equipment.

As one embodiment, the second node device B00 is a base station.

As one embodiment, the second node device B00 is a satellite device.

As one embodiment, the second node device B00 is a relay node.

As one embodiment, the second node device B00 is a vehicle-mounted communication device.

As one embodiment, the second node device B00 is a base station supporting full-duplex operation.

As one embodiment, the second node device B00 is a base station not supporting full-duplex operation.

As one embodiment, the second node device B00 is a device supporting an operation related to network energy saving.

As one embodiment, the second node device B00 is a device not supporting an operation related to network energy saving.

As one embodiment, the second node device B00 is one of a test apparatus, a test device, and a test instrument.

As one embodiment, the second transmitter BO1 comprises at least one of an antenna 420, a transmitting device 418, a multi-antenna transmitting processor 471, a transmitting processor 416, a controller/processor 475, and a memory 476 in FIG. 4 of the present application.

As one embodiment, the second transmitter B01 comprises at least the first five of the antenna 420, the transmitting device 418, the multi-antenna transmitting processor 471, the transmitting processor 416, the controller/processor 475, and the memory 476 in FIG. 4 of the present application.

As one embodiment, the second transmitter B01 comprises at least the first four of the antenna 420, the transmitting device 418, the multi-antenna transmitting processor 471, the transmitting processor 416, the controller/processor 475, and the memory 476 in FIG. 4 of the present application.

As one embodiment, the second transmitter B01 comprises at least the first three of the antenna 420, the transmitting device 418, the multi-antenna transmitting processor 471, the transmitting processor 416, the controller/processor 475, and the memory 476 in FIG. 4 of the present application.

As one embodiment, the second transmitter B01 comprises at least the first two of the antenna 420, the transmitting device 418, the multi-antenna transmitting processor 471, the transmitting processor 416, the controller/processor 475, and the memory 476 in FIG. 4 of the present application.

As one embodiment, the second receiver B02 comprises at least one of the antenna 420, a receiving device 418, a multi-antenna receiving processor 472, a receiving processor 470, the controller/processor 475, and the memory 476 in FIG. 4 of the present application.

As one embodiment, the second receiver B02 comprises at least the first five of the antenna 420, the receiving device 418, the multi-antenna receiving processor 472, the receiving processor 470, the controller/processor 475, and the memory 476 in FIG. 4 of the present application.

As one embodiment, the second receiver B02 comprises at least the first four of the antenna 420, the receiving device 418, the multi-antenna receiving processor 472, the receiving processor 470, the controller/processor 475, and the memory 476 in FIG. 4 of the present application.

As one embodiment, the second receiver B02 comprises at least the first three of the antenna 420, the receiving device 418, the multi-antenna receiving processor 472, the receiving processor 470, the controller/processor 475, and the memory 476 in FIG. 4 of the present application.

As one embodiment, the second receiver B02 comprises at least the first two of the antenna 420, the receiving device 418, the multi-antenna receiving processor 472, the receiving processor 470, the controller/processor 475, and the memory 476 in FIG. 4 of the present application.

As one embodiment, the second transmitter B01 sends first RRC signaling and a first information block; and the second receiver B02 receives a first HARQ-ACK bit block on a first PUCCH, the first HARQ-ACK bit block comprising at least one HARQ-ACK bit for a first SPS PDSCH configuration, wherein a target HARQ-ACK bit is one HARQ-ACK bit comprised in the first HARQ-ACK bit block, a first-type symbol is used for determining that the first HARQ-ACK bit block comprises the target HARQ-ACK bit, and the first-type symbol is a symbol that is indicated as a downlink symbol by the first RRC signaling and determined, by the first information block, to be available for uplink transmission; and the target HARQ-ACK bit is an HARQ-ACK bit for a target SPS PDSCH, the target SPS PDSCH is an SPS PDSCH that is associated with the first SPS PDSCH configuration and is other than a first-type SPS PDSCH, and the first-type SPS PDSCH is an SPS PDSCH overlapping the first-type symbol.

As one embodiment, the first RRC signaling is tdd-UL-DL-ConfigurationCommon.

As one embodiment, the first-type symbol is a symbol that is indicated as a downlink symbol by the first RRC signaling and indicated as an uplink symbol by the first information block.

As one embodiment, based on these two premises that a sending end of the first HARQ-ACK bit block is configured to receive a second-type SPS PDSCH and HARQ-ACK information for the target SPS PDSCH is associated with the first PUCCH, the first HARQ-ACK bit block is determined to comprise the target HARQ-ACK bit; and the second-type SPS PDSCH is an SPS PDSCH that is associated with the first SPS PDSCH configuration and is other than the first-type SPS PDSCH.

As one embodiment, the first-type SPS PDSCH is related to a first frequency band configuration, and the first frequency band configuration is used for determining a frequency domain resource that is allocated to an uplink.

As one embodiment, the first frequency band configuration is used for determining that at least one symbol that is indicated as a downlink symbol by the first RRC signaling belongs to the first-type symbol.

As one embodiment, at least a part of a frequency domain resource allocation corresponding to an SPS PDSCH belonging to the first-type SPS PDSCH is comprised in a frequency domain resource that is allocated to an uplink as determined by the first frequency band configuration.

As one embodiment, the first PUCCH is used only for sending HARQ-ACK information for an SPS PDSCH that is associated with a first-type RNTI, and the first-type RNTI is a CS-RNTI or a G-CS-RNTI having enabled HARQ-ACK information reporting.

Those ordinarily skilled in the art may understand that all or part of the steps in the above method may be completed by instructing relevant hardware through a program, and the program may be stored in a computer-readable storage medium, such as a read-only memory, a hard disk or an optical disk. Optionally, all or part of the steps in the above embodiment may also be implemented using one or more integrated circuits. Accordingly, each module unit in the above embodiment may be implemented in the form of hardware or in the form of a software function module. The present application is not limited to any specific form of software and hardware combination. A first node device in the present application includes but is not limited to mobile phones, tablet computers, laptops, network access cards, low-power-consumption devices, eMTC devices, NB-IoT devices, vehicle-mounted communication devices, aircrafts, airplanes, drones, remote-controlled airplanes and other wireless communication devices. The second node device in the present application includes but is not limited to mobile phones, tablet computers, laptops, network access cards, low-power-consumption devices, eMTC devices, NB-IoT devices, vehicle-mounted communication devices, aircrafts, airplanes, drones, remote-controlled airplanes and other wireless communication devices. The user equipment or UE or terminal in the present application includes but is not limited to mobile phones, tablet computers, laptops, network access cards, low-power-consumption devices, eMTC devices, NB-IoT devices, vehicle-mounted communication devices, aircrafts, airplanes, drones, remote-controlled airplanes and other wireless communication devices. The base station device or base station or network-side device in the present application includes but is not limited to macrocellular base stations, microcellular base stations, Femtocells, relay base stations, eNBs, gNBs, transmitter receiver points (TRPs), GNSS, relay satellites, satellite base stations, air base stations, test apparatuses, test devices, test instruments and other devices.

Those skilled in the art should understand that the present invention may be implemented in other specified forms without departing from its core or basic features. Therefore, the embodiments disclosed at present should be regarded as descriptive rather than restrictive in any way. The scope of the invention is determined by the appended claims rather than the foregoing description, and all modifications within their equivalent meanings and areas are considered to be comprised therein.

## Claims

1. A first node for wireless communication, **characterized in that** it comprises:
a first receiver receiving first RRC signaling and a first information block; and
a first transmitter sending a first HARQ-ACK bit block on a first PUCCH, the first HARQ-ACK bit block comprising at least one HARQ-ACK bit for a first SPS PDSCH configuration,
wherein a target HARQ-ACK bit is one HARQ-ACK bit comprised in the first HARQ-ACK bit block, a first-type symbol is used for determining that the first HARQ-ACK bit block comprises the target HARQ-ACK bit, and the first-type symbol is a symbol that is indicated as a downlink symbol by the first RRC signaling and determined, by the first information block, to be available for uplink transmission; and the target HARQ-ACK bit is an HARQ-ACK bit for a target SPS PDSCH, the target SPS PDSCH is an SPS PDSCH that is associated with the first SPS PDSCH configuration and is other than a first-type SPS PDSCH, and the first-type SPS PDSCH is an SPS PDSCH overlapping the first-type symbol.

2. The first node according to claim 1, **characterized in that** the first RRC signaling comprises tdd-UL-DL-ConfigurationCommon.

3. The first node according to claim 1 or 2, **characterized in that** the first node determines, after performing a determination, that the first HARQ-ACK bit block comprises the target HARQ-ACK bit, a determination condition of the determination being performed comprises that the first node is configured to receive a second-type SPS PDSCH, and the second-type SPS PDSCH is an SPS PDSCH that is associated with the first SPS PDSCH configuration and is other than the first-type SPS PDSCH.

4. The first node according to any one of claims 1 to 3, **characterized in that** based on these two premises that the first node is configured to receive the second-type SPS PDSCH and HARQ-ACK information for the target SPS PDSCH is associated with the first PUCCH, the first node determines that the first HARQ-ACK bit block comprises the target HARQ-ACK bit; and the second-type SPS PDSCH is an SPS PDSCH that is associated with the first SPS PDSCH configuration and is other than the first-type SPS PDSCH.

5. The first node according to claim 3 or 4, **characterized in that** the target SPS PDSCH is one SPS PDSCH in the second-type SPS PDSCH.

6. The first node according to any one of claims 3 to 5, **characterized in that** the second-type SPS PDSCH is an SPS PDSCH other than a third-type SPS PDSCH, and the third-type SPS PDSCH is an SPS PDSCH that does not need to be received among overlapping SPS PDSCHs; the second-type SPS PDSCH is an SPS PDSCH other than a fourth-type SPS PDSCH, and the fourth-type SPS PDSCH is an SPS PDSCH that does not need to be received based on a UE capability for a number of PDSCH receptions in one slot; and the second-type SPS PDSCH is an SPS PDSCH other than a fifth-type SPS PDSCH, and the fifth-type SPS PDSCH is an SPS PDSCH overlapping a symbol(s) that is (are) indicated as an uplink symbol(s) by tdd-UL-DL-ConfigurationCommon or tdd-UL-DL-ConfigurationDedicated.

7. The first node according to any one of claims 1 to 6, **characterized in that** the first-type SPS PDSCH is related to a first frequency band configuration, and the first frequency band configuration is used for determining a frequency domain resource that is allocated to an uplink.

8. The first node according to claim 7, **characterized in that** the first frequency band configuration is used for determining that at least one symbol that is indicated as a downlink symbol by the first RRC signaling belongs to the first-type symbol.

9. The first node according to claim 7, **characterized in that** at least a part of a frequency domain resource allocation corresponding to an SPS PDSCH belonging to the first-type SPS PDSCH is comprised in the frequency domain resource that is allocated to the uplink as determined by the first frequency band configuration.

10. The first node according to any one of claims 1 to 9, **characterized in that** the first PUCCH is used only for sending HARQ-ACK information for an SPS PDSCH that is associated with a first-type RNTI, and the first-type RNTI is a CS-RNTI or a G-CS-RNTI having enabled HARQ-ACK information reporting.

11. A second node for wireless communication, **characterized in that** it comprises:
a second transmitter sending first RRC signaling and a first information block; and
a second receiver receiving a first HARQ-ACK bit block on a first PUCCH, the first HARQ-ACK bit block comprising at least one HARQ-ACK bit for a first SPS PDSCH configuration,
wherein a target HARQ-ACK bit is one HARQ-ACK bit comprised in the first HARQ-ACK bit block, a first-type symbol is used for determining that the first HARQ-ACK bit block comprises the target HARQ-ACK bit, and the first-type symbol is a symbol that is indicated as a downlink symbol by the first RRC signaling and determined, by the first information block, to be available for uplink transmission; and the target HARQ-ACK bit is an HARQ-ACK bit for a target SPS PDSCH, the target SPS PDSCH is an SPS PDSCH that is associated with the first SPS PDSCH configuration and is other than a first-type SPS PDSCH, and the first-type SPS PDSCH is an SPS PDSCH overlapping the first-type symbol.

12. The second node according to claim 11, **characterized in that** the first RRC signaling comprises tdd-UL-DL-ConfigurationCommon.

13. The second node according to claim 11 or 12, **characterized in that** any HARQ-ACK bit in the first HARQ-ACK bit block is generated for one serving cell, one SPS PDSCH configuration, and one downlink slot.

14. The second node according to any one of claims 11 to 13, **characterized in that** based on these two premises that a sending end of the first HARQ-ACK bit block is configured to receive a second-type SPS PDSCH and HARQ-ACK information for the target SPS PDSCH is associated with the first PUCCH, the first HARQ-ACK bit block is determined to comprise the target HARQ-ACK bit; and the second-type SPS PDSCH is an SPS PDSCH that is associated with the first SPS PDSCH configuration and is other than the first-type SPS PDSCH.

15. The second node according to claim 14, **characterized in that** the target SPS PDSCH is one SPS PDSCH in the second-type SPS PDSCH.

16. The second node according to claim 14 or 15, **characterized in that** the second-type SPS PDSCH is an SPS PDSCH other than a third-type SPS PDSCH, and the third-type SPS PDSCH is an SPS PDSCH that does not need to be received among overlapping SPS PDSCHs; the second-type SPS PDSCH is an SPS PDSCH other than a fourth-type SPS PDSCH, and the fourth-type SPS PDSCH is an SPS PDSCH that does not need to be received based on a UE capability for a number of PDSCH receptions in one slot; and the second-type SPS PDSCH is an SPS PDSCH other than a fifth-type SPS PDSCH, and the fifth-type SPS PDSCH is an SPS PDSCH overlapping a symbol(s) that is (are) indicated as an uplink symbol(s) by tdd-UL-DL-ConfigurationCommon or tdd-UL-DL-ConfigurationDedicated.

17. The second node according to any one of claims 11 to 16, **characterized in that** the first-type SPS PDSCH is related to a first frequency band configuration, and the first frequency band configuration is used for determining a frequency domain resource that is allocated to an uplink.

18. The second node according to claim 17, **characterized in that** the first frequency band configuration is used for determining that at least one symbol that is indicated as a downlink symbol by the first RRC signaling belongs to the first-type symbol.

19. The second node according to claim 17, **characterized in that** at least a part of a frequency domain resource allocation corresponding to an SPS PDSCH belonging to the first-type SPS PDSCH is comprised in the frequency domain resource that is allocated to the uplink as determined by the first frequency band configuration.

20. The second node according to any one of claims 11 to 19, **characterized in that** the first PUCCH is used only for sending HARQ-ACK information for an SPS PDSCH that is associated with a first-type RNTI, and the first-type RNTI is a CS-RNTI or a G-CS-RNTI having enabled HARQ-ACK information reporting.

21. A method used in a first node for wireless communication, **characterized in that** it comprises:
receiving first RRC signaling and a first information block; and
sending a first HARQ-ACK bit block on a first PUCCH, the first HARQ-ACK bit block comprising at least one HARQ-ACK bit for a first SPS PDSCH configuration,
wherein a target HARQ-ACK bit is one HARQ-ACK bit comprised in the first HARQ-ACK bit block, a first-type symbol is used for determining that the first HARQ-ACK bit block comprises the target HARQ-ACK bit, and the first-type symbol is a symbol that is indicated as a downlink symbol by the first RRC signaling and determined, by the first information block, to be available for uplink transmission; and the target HARQ-ACK bit is an HARQ-ACK bit for a target SPS PDSCH, the target SPS PDSCH is an SPS PDSCH that is associated with the first SPS PDSCH configuration and is other than a first-type SPS PDSCH, and the first-type SPS PDSCH is an SPS PDSCH overlapping the first-type symbol.

22. The method used in a first node according to claim 21, **characterized in that** the first RRC signaling comprises tdd-UL-DL-ConfigurationCommon.

23. The method used in a first node according to claim 21 or 22, **characterized in that** the first node determines, after performing a determination, that the first HARQ-ACK bit block comprises the target HARQ-ACK bit, a determination condition of the determination being performed comprises that the first node is configured to receive a second-type SPS PDSCH, and the second-type SPS PDSCH is an SPS PDSCH that is associated with the first SPS PDSCH configuration and is other than the first-type SPS PDSCH.

24. The method used in a first node according to any one of claims 21 to 23, **characterized in that** based on these two premises that the first node is configured to receive the second-type SPS PDSCH and HARQ-ACK information for the target SPS PDSCH is associated with the first PUCCH, the first node determines that the first HARQ-ACK bit block comprises the target HARQ-ACK bit; and the second-type SPS PDSCH is an SPS PDSCH that is associated with the first SPS PDSCH configuration and is other than the first-type SPS PDSCH.

25. The method used in a first node according to claim 23 or 24, **characterized in that** the target SPS PDSCH is one SPS PDSCH in the second-type SPS PDSCH.

26. The method used in a first node according to any one of claims 23 to 25, **characterized in that** the second-type SPS PDSCH is an SPS PDSCH other than a third-type SPS PDSCH, and the third-type SPS PDSCH is an SPS PDSCH that does not need to be received among overlapping SPS PDSCHs; the second-type SPS PDSCH is an SPS PDSCH other than a fourth-type SPS PDSCH, and the fourth-type SPS PDSCH is an SPS PDSCH that does not need to be received based on a UE capability for a number of PDSCH receptions in one slot; and the second-type SPS PDSCH is an SPS PDSCH other than a fifth-type SPS PDSCH, and the fifth-type SPS PDSCH is an SPS PDSCH overlapping a symbol(s) that is (are) indicated as an uplink symbol(s) by tdd-UL-DL-ConfigurationCommon or tdd-UL-DL-ConfigurationDedicated.

27. The method used in a first node according to any one of claims 21 to 26, **characterized in that** the first-type SPS PDSCH is related to a first frequency band configuration, and the first frequency band configuration is used for determining a frequency domain resource that is allocated to an uplink.

28. The method used in a first node according to claim 27, **characterized in that** the first frequency band configuration is used for determining that at least one symbol that is indicated as a downlink symbol by the first RRC signaling belongs to the first-type symbol.

29. The method used in a first node according to claim 27, **characterized in that** at least a part of a frequency domain resource allocation corresponding to an SPS PDSCH belonging to the first-type SPS PDSCH is comprised in the frequency domain resource that is allocated to the uplink as determined by the first frequency band configuration.

30. The method used in a first node according to any one of claims 21 to 29, **characterized in that** the first PUCCH is used only for sending HARQ-ACK information for an SPS PDSCH that is associated with a first-type RNTI, and the first-type RNTI is a CS-RNTI or a G-CS-RNTI having enabled HARQ-ACK information reporting.

31. A method used in a second node for wireless communication, **characterized in that** it comprises:
sending first RRC signaling and a first information block; and
receiving a first HARQ-ACK bit block on a first PUCCH, the first HARQ-ACK bit block comprising at least one HARQ-ACK bit for a first SPS PDSCH configuration,
wherein a target HARQ-ACK bit is one HARQ-ACK bit comprised in the first HARQ-ACK bit block, a first-type symbol is used for determining that the first HARQ-ACK bit block comprises the target HARQ-ACK bit, and the first-type symbol is a symbol that is indicated as a downlink symbol by the first RRC signaling and determined, by the first information block, to be available for uplink transmission; and the target HARQ-ACK bit is an HARQ-ACK bit for a target SPS PDSCH, the target SPS PDSCH is an SPS PDSCH that is associated with the first SPS PDSCH configuration and is other than a first-type SPS PDSCH, and the first-type SPS PDSCH is an SPS PDSCH overlapping the first-type symbol.

32. The method used in a second node according to claim 31, **characterized in that** the first RRC signaling comprises tdd-UL-DL-ConfigurationCommon.

33. The method used in a second node according to claim 31 or 32, **characterized in that** any HARQ-ACK bit in the first HARQ-ACK bit block is generated for one serving cell, one SPS PDSCH configuration, and one downlink slot.

34. The method used in a second node according to any one of claims 31 to 33, **characterized in that** based on these two premises that a sending end of the first HARQ-ACK bit block is configured to receive a second-type SPS PDSCH and HARQ-ACK information for the target SPS PDSCH is associated with the first PUCCH, the first HARQ-ACK bit block is determined to comprise the target HARQ-ACK bit; and the second-type SPS PDSCH is an SPS PDSCH that is associated with the first SPS PDSCH configuration and is other than the first-type SPS PDSCH.

35. The method used in a second node according to claim 34, **characterized in that** the target SPS PDSCH is one SPS PDSCH in the second-type SPS PDSCH.

36. The method used in a second node according to claim 34 or 35, **characterized in that** the second-type SPS PDSCH is an SPS PDSCH other than a third-type SPS PDSCH, and the third-type SPS PDSCH is an SPS PDSCH that does not need to be received among overlapping SPS PDSCHs; the second-type SPS PDSCH is an SPS PDSCH other than a fourth-type SPS PDSCH, and the fourth-type SPS PDSCH is an SPS PDSCH that does not need to be received based on a UE capability for a number of PDSCH receptions in one slot; and the second-type SPS PDSCH is an SPS PDSCH other than a fifth-type SPS PDSCH, and the fifth-type SPS PDSCH is an SPS PDSCH overlapping a symbol(s) that is (are) indicated as an uplink symbol(s) by tdd-UL-DL-ConfigurationCommon or tdd-UL-DL-ConfigurationDedicated.

37. The method used in a second node according to any one of claims 31 to 36, **characterized in that** the first-type SPS PDSCH is related to a first frequency band configuration, and the first frequency band configuration is used for determining a frequency domain resource that is allocated to an uplink.

38. The method used in a second node according to claim 37, **characterized in that** the first frequency band configuration is used for determining that at least one symbol that is indicated as a downlink symbol by the first RRC signaling belongs to the first-type symbol.

39. The method used in a second node according to claim 37, **characterized in that** at least a part of a frequency domain resource allocation corresponding to an SPS PDSCH belonging to the first-type SPS PDSCH is comprised in the frequency domain resource that is allocated to the uplink as determined by the first frequency band configuration.

40. The method used in a second node according to any one of claims 31 to 39, **characterized in that** the first PUCCH is used only for sending HARQ-ACK information for an SPS PDSCH that is associated with a first-type RNTI, and the first-type RNTI is a CS-RNTI or a G-CS-RNTI having enabled HARQ-ACK information reporting.
